# EUROPEAN PATENT APPLICATION

(11) **EP 3 904 899 A1**
(43) Date of publication of application: **03.11.2021**
(21) Application number: 19903252.5
(22) Date of filing: 23.12.2019
(51) Int. Cl.: G01S 1/68, G06F 21/44

(54) **LOCATION INFORMATION PROVIDING SYSTEM AND LOCATION INFORMATION PROVIDING METHOD**

(30) Priority: 25.12.2018 JP 2018241570
(71) Applicant: Enabler Ltd., Tokyo 105-6923 (JP)
(72) Inventor: YOKOTA, Tomonori, Tokyo 105-6923 (JP); OKANO, Kazuki, Tokyo 105-6923 (JP); ISHII, Makoto, Tokyo 105-6923 (JP); HAMADA, Shigeyoshi, Tokyo 105-6923 (JP)
(74) Representative: Boult Wade Tennant LLP
(86) International application number: PCT/JP2019/050345
(87) International publication number: WO 2020/137971

(57) **Abstract**

A position information providing system includes at least one message transmitter and an authentication server synchronous in time with each other. The message transmitter includes generation means for generating an authentication code depending on time and a specific code and transmission means for transmitting a message. The authentication server includes authentication means for certifying, in response to an authentication request, from a receiver that has received a message from any of the at least one message transmitter, including information in the received message, authenticity of position information included in the authentication request by determining validity of an authentication code included in the authentication request based on time information included in the authentication request and the specific code uniquely allocated to a message transmitter corresponding to the position information included in the authentication request and storage means for storing the position information authenticity of which is certified.

## Description

### TECHNICAL FIELD

The present technology relates to a system and a method that provides position information.

### BACKGROUND ART

A mobile terminal such as a portable telephone and a smartphone has recently performed a global navigation function to specify a current position by using a wireless signal (which is also referred to as a "GNSS signal" below) from a global navigation satellite system (GNSS) such as a global positioning system (GPS).

An indoor messaging system (IMES) technology that allows seamless outdoor and indoor global navigation as being combined with a GNSS signal by using such a global navigation function has been put into practical use. According to the IMES technology, an IMES message compatible with a GNSS signal is wirelessly transmitted indoors beyond the reach of the GNSS signal. The mobile terminal can specify the current position not only outdoors but also indoors by receiving an IMES message in addition to the GNSS signal.

### CITATION LIST

### NON PATENT LITERATURE

NPL 1: "IMES User Interface Specifications (IS-IMES)," Japan Aerospace Exploration Agency, October 2016

### SUMMARY OF INVENTION

### TECHNICAL PROBLEM

In consideration of providing various services using position information by making use of an IMES message, authenticity of the position information should be guaranteed. There is a new problem, however, of absence of a scheme for guaranteeing authenticity of position information presented by a user who has received an existing IMES message.

In consideration of such a problem, one of objects of the present technology is to provide a new scheme for guaranteeing authenticity of provided position information.

### SOLUTION TO PROBLEM

A position information providing system according to one aspect includes at least one message transmitter and an authentication server synchronous in time with each other. Each of the at least one message transmitter includes generation means for generating an authentication code depending on time and a specific code uniquely allocated to each message transmitter and transmission means for transmitting a message including position information and time information and the generated authentication code. The authentication server includes authentication means for certifying, in response to an authentication request, from any of the at least one message transmitter, including information in the received message, authenticity of position information included in the authentication request, by determining validity of an authentication code included in the authentication request based on time information included in the authentication request and a specific code uniquely allocated to a message transmitter corresponding to the position information included in the authentication request and storage means for storing the position information authenticity of which is certified.

The authentication means may include means for generating a challenge and transmitting the challenge to the receiver from which the authentication request is transmitted in response to determination by the authentication means that the authentication code included in the authentication request is valid, and means for determining, in response to a second authentication request including a response generated based on the transmitted challenge and information in a message newly received by the receiver which is a destination of the challenge, validity of the response included in the second authentication request.

The authentication means may further include means for setting a session for the receiver from which the authentication request is transmitted and transmitting the generated session to the receiver from which the authentication request is transmitted, in response to determination by the authentication means that the authentication code included in the authentication request is valid.

The second authentication request may include identification information for specifying the set session.

The authentication means may further include means for determining whether or not the session specified in the second authentication request is within a validity period set in advance.

The authentication means may further include means for determining whether or not a time point of reception of the authentication code is within a validity period set in advance from time indicated in the time information used in generation of the authentication code.

The authentication means may further include means for issuing the authentication code corresponding to the position information authenticity of which is certified, and the storage means may store the position information the authenticity of which is certified and the issued authentication code in association with each other.

The storage means may provide, in response to a request accompanied by an external authentication code, the position information corresponding to the authentication code included in the request.

The authentication server may further include means for transmitting the specific code to each of the at least one message transmitter.

The message transmitter may transmit a message compatible with a wireless signal from a global navigation satellite system.

According to another aspect, a position information providing method in a position information providing system including at least one message transmitter and an authentication server synchronous in time with each other is provided. The position information providing method includes generating, by each of the at least one message transmitter, an authentication code depending on time and a specific code uniquely allocated to each message transmitter, transmitting, by each of the at least one message transmitter, a message including position information and time information and the generated authentication code, certifying, by the authentication server, in response to an authentication request, from a receiver that has received a message transmitted from any of the at least one message transmitter, including information in the received message, authenticity of position information included in the authentication request, by determining validity of an authentication code included in the authentication request based on time information included in the authentication request and a specific code uniquely allocated to a message transmitter corresponding to the position information included in the authentication request, and storing the position information authenticity of which is certified.

### ADVANTAGEOUS EFFECTS OF INVENTION

According to an embodiment, a new scheme for guaranteeing authenticity of provided position information can be provided.

### BRIEF DESCRIPTION OF DRAWINGS

Fig. 1 is a diagram for illustrating a form of providing position information with the use of an existing IMES message.
Fig. 2 is a schematic diagram showing an exemplary overall configuration of a position information providing system according to the present embodiment.
Fig. 3 is a schematic diagram showing an exemplary configuration involved with providing an IMES-A message in the position information providing system according to the present embodiment.
Fig. 4 is a schematic diagram showing exemplary processing for generating a TOTP and an IMES-A message in an IMES transmitter in the position information providing system according to the present embodiment.
Fig. 5 is a diagram for illustrating a method of synchronizing a TOTP between an IMES transmitter and an authentication server in the position information providing system according to the present embodiment.
Fig. 6 is a diagram for illustrating processing for generating a TOTP in the IMES transmitter and the authentication server in the position information providing system according to the present embodiment.
Fig. 7 is a diagram showing an exemplary message type transmitted from the IMES transmitter included in the position information providing system according to the present embodiment.
Fig. 8 is a diagram showing an exemplary frame structure of a message format used as an IMES-A message in the position information providing system according to the present embodiment.
Fig. 9 is a diagram showing an exemplary frame structure of a message format used as an IMES-A message in a position information providing system 1 according to the present embodiment.
Fig. 10 is a diagram showing an exemplary message format involved with position authentication processing provided from an IMES receiver included in the position information providing system according to the present embodiment.
Fig. 11 is a schematic diagram showing an exemplary hardware configuration of the IMES receiver that can be used in the position information providing system according to the present embodiment.
Fig. 12 is a schematic diagram showing an exemplary software configuration of the IMES receiver that can be used in the position information providing system according to the present embodiment.
Fig. 13 is a schematic diagram showing an exemplary hardware configuration of the authentication server included in the position information providing system according to the present embodiment.
Fig. 14 is a sequence diagram illustrating overview of position authentication processing in the position information providing system according to the present embodiment.
Fig. 15 is a diagram for illustrating first-stage authentication in the position authentication processing in the position information providing system according to the present embodiment.
Fig. 16 is a diagram for illustrating second-stage authentication in the position authentication processing in the position information providing system according to the present embodiment.
Fig. 17 is a sequence diagram illustrating management of a validity period in the position authentication processing in the position information providing system according to the present embodiment.
Fig. 18 is a diagram for illustrating an exemplary application of file management using the position information providing system according to the present embodiment.
Fig. 19 is a diagram for illustrating an exemplary configuration for providing a Geofence function by using the position information providing system according to the present embodiment.
Fig. 20 is a diagram for illustrating an exemplary configuration for implementing a car sharing system by using the position information providing system according to the present embodiment.
Fig. 21 is a diagram for illustrating an exemplary configuration for implementing credit card authorization by using the position information providing system according to the present embodiment.

### DESCRIPTION OF EMBODIMENTS

An embodiment of the present invention will be described in detail with reference to the drawings. The same or corresponding elements in the drawings have the same reference characters allotted and description thereof will not be repeated.

### <A. Overview>

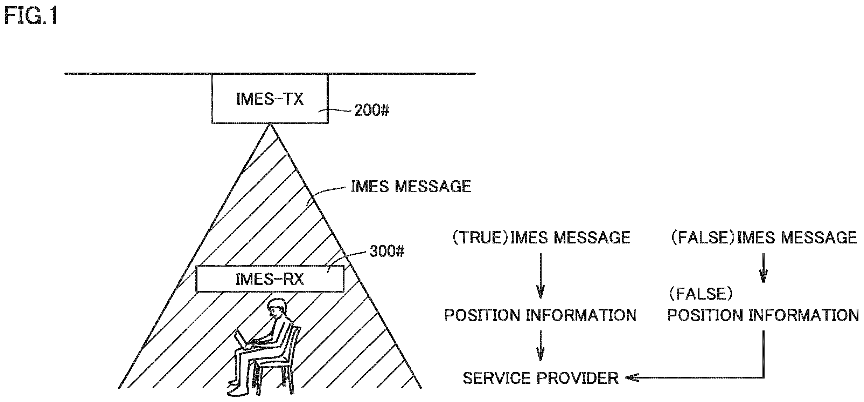

Fig. 1 is a diagram for illustrating a form of providing position information with the use of an existing IMES message. Referring to Fig. 1, for example, an IMES message is transmitted from an IMES transmitter 200# arranged indoors. The IMES message may include time information, a timing signal, and the like, in addition to position information for providing a global navigation service such as a latitude, a longitude, and a floor (or a height).

A mobile terminal such as a portable telephone and a smartphone basically performs a global navigation function for receiving a GNSS signal, and by using the global navigation function, the mobile terminal also functions as an IMES receiver 300#. In other words, IMES receiver 300# can specify the current position by receiving an IMES message.

Installation of IMES transmitter 200# and transmission of an IMES message from IMES transmitter 200# should be in conformity with "IMES Transmitter Management Operating Procedures" and "Agreement on Use of Complementary Ground System (IMES) Transmitter" defined by Japan Aerospace Exploration Agency (JAXA) as well as "IMES Operation Definition" that is being laid down by the IMES Consortium. In general, use of information corresponding to a location information code managed by a public organization (Geospatial Information Authority of Japan) as position information to be included in an IMES message is required. Reliability of the IMES message (message) transmitted from IMES transmitter 200# is guaranteed by such standards.

The scheme as described above, however, merely guarantees reliability of the IMES message itself, and does not guarantee a position of a user who obtains position information or the like from the IMES message.

For example, a case in which position information is obtained by using an IMES message received at IMES receiver 300# and various services are provided based on this obtained position information is assumed. Essentially, position information included in the IMES message transmitted from IMES transmitter 200# is given to a service provider. The format of the IMES message has been published. By checking contents of the IMES message, the IMES message can be falsified. In this case, false position information obtained from the falsified IMES message is given to the service provider, which makes it difficult to provide due services.

The position information providing system according to the present embodiment provides a scheme with which when and where a mobile terminal or a user of the mobile terminal was present can be proved. In other words, a scheme for guaranteeing authenticity of time and a place of presence of each user is provided.

More specifically, in the position information providing system according to the present embodiment, a message including, in addition to position information indicating a position of each IMES transmitter 200#, an authentication code for guaranteeing authenticity of the position information is transmitted. In order to distinguish a message including such an authentication code from an existing IMES message, the message is also referred to as an "indoor messaging system-authentication (IMES-A) message" in the description below. When an IMES-A message is transmitted as a wireless signal, the wireless signal is also referred to as an "IMES-A signal."

"Transmission of the IMES-A signal" herein may encompass a concept of "transmission" in which an IMES-A signal is transmitted with a reception side being specified in addition to a concept of "broadcast" in which an IMES-A signal is transmitted without a reception side being specified.

Details of the IMES-A message including the authentication code and a system or an application using the IMES-A message will be described later.

With the scheme provided by the position information providing system according to the present embodiment, security and authorization using position information can be applied to extensive applications.

Though authentication of position information provided by using an IMES-A message will be described below for the sake of convenience of description, information to be authenticated is not limited to position information, but authentication is applicable to any information that may be included in an IMES-A message. Since the IMES-A message can perform an authentication function that cannot be provided by a GNSS signal, it may be transmitted not only indoors but also outdoors within the scope in conformity with laws and regulations and guidelines.

### <B. Overall Configuration of Position Information Providing System>

An overall configuration of the position information providing system according to the present embodiment will initially be described.

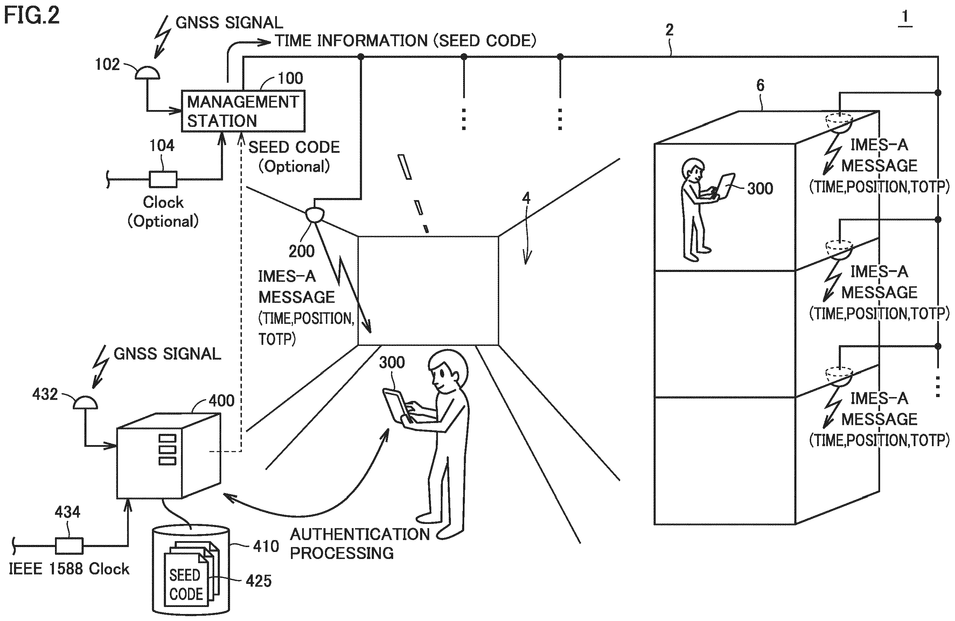

Fig. 2 is a schematic diagram showing an exemplary overall configuration of a position information providing system 1 according to the present embodiment. Referring to Fig. 2, for example, at least one IMES transmitter 200 (which may also be denoted as an "IMES-TX" below) is arranged in an underground mall 4 or in a building 6. IMES transmitter 200 corresponds to a message transmitter that transmits or broadcasts a message. IMES transmitter 200 may be arranged in an underground parking area without being limited to underground mall 4 or building 6. In general, arrangement of IMES transmitter 200 at any position where a GNSS signal cannot be received is assumed.

An IMES-A message transmitted from each IMES transmitter 200 basically includes position information (Position) and an authentication code. The IMES-A message may further include time information and/or a timing signal (Timing).

In position information providing system 1 shown in Fig. 2, in order to perform an authentication function, each IMES transmitter 200 uses time in common to an authentication server 400. In other words, at least one IMES transmitter 200 and authentication server 400 are synchronous in time with each other.

In order to obtain time common between IMES transmitter 200 and authentication server 400, by way of example, a GNSS signal or an external clock 104 is used.

Though a configuration for using a GNSS signal or clock 104 may individually be provided in each IMES transmitter 200, in position information providing system 1 shown in Fig. 2, a configuration in which a management station 100 and at least one IMES transmitter 200 are connected to each other through a transmission path 2 and time information is transmitted from management station 100 to each IMES transmitter 200 is illustrated.

More specifically, management station 100 performs a GNSS reception function for processing a GNSS signal received through a GNSS antenna 102 and/or a function for obtaining time from clock 104.

Clock 104 can use, for example, the precision time protocol (PTP) technology. Specifically, synchronous time may be obtained under a protocol defined in Institute of Electrical and Electronics Engineers (IEEE) 1588 (PTP) or IEEE 1588v2 (PTPv2). As will be described later, in the present embodiment, an authentication code should only be generated in approximately one-second cycles. Therefore, in such a case, a technology poorer in synchronization performance than the PTP such as the network time protocol (NTP) may be adopted. Alternatively, standard waves may be used.

Any network or line can be employed as transmission path 2. For example, a signal line laid as being integrated with a power line or a transmission network of a cable television (CATV) can be employed as transmission path 2.

Each IMES transmitter 200 generates an authentication code each time from time information from management station 100 and a securely managed seed code. The seed code corresponds to a specific code uniquely allocated to each IMES transmitter 200.

The "authentication code" herein means additional information for guaranteeing authenticity of a message transmitted from IMES transmitter 200. In the present embodiment, a time-based one-time password (TOTP) dependent on generated time or the like is employed for the "authentication code." Though details will be described with the "TOTP" representing an exemplary authentication code being defined as the base for the sake of convenience of description, the "authentication code" in the invention of the present application is not limited to the "TOTP" but any information for guaranteeing authenticity of a message may be applicable.

More specifically, each IMES transmitter 200 transmits an IMES-A signal including time information in synchronization with management station 100 and another piece of information, position information corresponding to the IMES transmitter itself, and a TOTP generated in the IMES transmitter itself.

When an IMES receiver 300 receives an IMES-A signal from any IMES transmitter 200, it obtains position information or the like from an IMES-A message obtained by decoding the received IMES-A signal and obtains a corresponding TOTP. IMES receiver 300 performs position authentication processing between the IMES receiver itself and authentication server 400 based on the obtained TOTP, as necessary. Authenticity of the position information presented by IMES receiver 300 is thus objectively guaranteed. Details of the position authentication processing between IMES receiver 300 and authentication server 400 will be described later.

Authentication server 400 is synchronous in time with IMES transmitter 200. More specifically, authentication server 400 obtains accurate time from a GNSS signal received through a GNSS antenna 432. Alternatively, authentication server 400 may obtain synchronized time from a clock 434 similar to clock 104 described above.

In other words, authentication server 400 is common in time to IMES transmitter 200. Therefore, if authentication server 400 knows a seed code allocated to each IMES transmitter 200, it can know a TOTP that will be generated by each IMES transmitter 200. Therefore, authentication server 400 can determine validity of a value of the TOTP brought in correspondence with position information presented by IMES receiver 300 in accordance with a prescribed logic, and can guarantee authenticity of the position information presented by IMES receiver 300 based on a result of this determination.

A unique specific code internally held in each IMES transmitter 200 may be employed as a seed code to be used for generation of the TOTP by each IMES transmitter 200. In this case, authentication server 400 holds in a storage 410, a specific code (a seed code 425) held by each IMES transmitter 200.

Alternatively, the seed code to be used for generation of the TOTP by each IMES transmitter 200 may be provided by authentication server 400 each time. In this case, authentication server 400 provides a (one-time) seed code that changes over time, for example, to management station 100. Management station 100 may provide the seed code from authentication server 400 to each IMES transmitter 200 through transmission path 2.

The seed code from authentication server 400 may be provided for each IMES transmitter 200 connected to management station 100. In this case, processing for giving a corresponding seed code between management station 100 and specific IMES transmitter 200 is performed.

### <C. Configuration Involved with Providing IMES-A Message>

A configuration involved with providing an IMES-A message in position information providing system 1 according to the present embodiment will now be described.

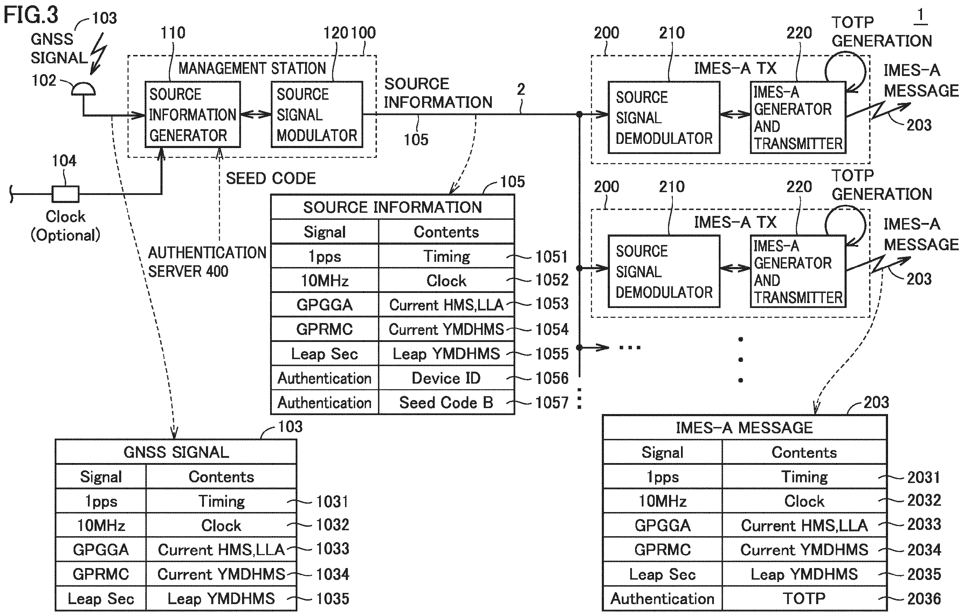

Fig. 3 is a schematic diagram showing an exemplary configuration involved with providing an IMES-A message in position information providing system 1 according to the present embodiment. Referring to Fig. 3, position information providing system 1 includes management station 100 and at least one IMES transmitter 200.

Management station 100 provides information for generating an IMES-A message (which is also referred to as "source information" below) to each IMES transmitter 200. A signal including the source information that propagates through transmission path 2 is also referred to as a "source signal."

More specifically, management station 100 includes a source information generator 110 and a source signal modulator 120.

Source information generator 110 obtains time information, a timing (Timing) signal, a clock (Clock) signal, and the like included in a GNSS signal received through GNSS antenna 102. Management station 100 may obtain information and a signal included in the GNSS signal from clock 104, instead of the GNSS signal.

Source information generator 110 may optionally include a seed code provided from authentication server 400 in the source information.

Source signal modulator 120 generates a source signal by modulating the source information generated by source information generator 110 and transmits or broadcasts the source signal to at least one IMES transmitter 200. A scheme for generation of the source signal should only be designed as appropriate depending on a medium that implements transmission path 2. For example, when a transmission path implementing a CATV network is used, an idle frequency other than a frequency used in the CATV network may be used as carrier waves.

IMES transmitter 200 dynamically generates an IMES-A message from the source information provided from management station 100 and transmits the IMES-A message as an IMES-A signal.

More specifically, IMES transmitter 200 includes a source signal demodulator 210 and an IMES-A generator and transmitter 220.

Source signal demodulator 210 reproduces the source information by demodulating the source signal provided from management station 100.

IMES-A generator and transmitter 220 generates an IMES-A message including a dynamically generated TOTP from the source information reproduced by source signal demodulator 210. Then, IMES-A generator and transmitter 220 transmits an IMES-A signal generated by modulating the generated IMES-A message. IMES-A generator and transmitter 220 preferably transmits an IMES-A signal compatible with a GNSS signal. In other words, IMES transmitter 200 may transmit a message or a wireless signal compatible with a wireless signal (GNSS signal) from the global navigation satellite system (GNSS).

Without being limited as such, IMES transmitter 200 may transmit a message or a wireless signal under a specific standard.

Fig. 3 shows exemplary information (contents) included in each of a GNSS signal 103 received by management station 100, a source signal 105 provided from management station 100, and an IMES-A message 203 transmitted from IMES transmitter 200.

By way of example, GNSS signal 103 includes a timing signal 1031, a clock signal 1032, position information 1033, time information 1034, and leap second information 1035.

Timing signal 1031 provides, for example, a timing signal included in a GNSS signal and includes, for example, a 1-second pulse signal (1 PPS signal). Clock signal 1032 provides, for example, a frequency source included in a GNSS signal and includes, for example, a 10-MHz pulse signal. Position information 1033 provides a global navigation service and includes, for example, information on a latitude, a longitude, a floor, and the like. Time information 1034 and leap second information 1035 provide time information included in a GNSS signal. Time information 1034 includes, for example, information on Christian year, month, day, hour, minute, and second, and leap second information 1035 includes information for correcting a leap second.

Source signal 105 includes a timing signal 1051, a clock signal 1052, position information 1053, time information 1054, leap second information 1055, device identification information 1056, and a seed code 1057.

Timing signal 1051, clock signal 1052, position information 1053, time information 1054, and leap second information 1055 are substantially identical to timing signal 1031, clock signal 1032, position information 1033, time information 1034, and leap second information 1035 included in GNSS signal 103. Since position information 1053 is often provided in each IMES transmitter 200, it does not have to be included in source signal 105.

Device identification information 1056 and seed code 1057 are information for generating a TOTP in each IMES transmitter 200. More specifically, seed code 1057 is a secure code for each IMES transmitter 200 provided by authentication server 400. Though an identical seed code may be used among a plurality of IMES transmitters 200 depending on a scale of a system, a seed key is basically allocated for each IMES transmitter 200. In this case, a value indicating to which IMES transmitter 200 a seed key is directed is stored in device identification information 1056 and a value of a corresponding seed key is stored in seed code 1057.

In other words, device identification information 1056 and seed code 1057 each include a seed code provided to each IMES transmitter 200 and identification information for specifying IMES transmitter 200 to which the seed code is provided.

IMES-A message 203 includes a timing signal 2031, a clock signal 2032, position information 2033, time information 2034, leap second information 2035, and a TOTP 2036.

Timing signal 2031, clock signal 2032, time information 2034, and leap second information 2035 are substantially identical to timing signal 1031, clock signal 1032, time information 1034, and leap second information 1035 included in GNSS signal 103.

Position information 2033 includes position information uniquely provided from IMES transmitter 200 that has transmitted the IMES-A signal.

TOTP 2036 includes a value of the TOTP dynamically generated in IMES transmitter 200 that has transmitted the IMES-A signal.

By receiving IMES-A message 203, the mobile terminal can obtain, in addition to position information in accordance with the current position of the mobile terminal, an authentication code (TOTP) for guaranteeing authenticity of the position information and accurate time information.

### <D. Generation of TOTP and IMES-A Message>

Generation of a TOTP and an IMES-A message including the TOTP in IMES transmitter 200 will now be described.

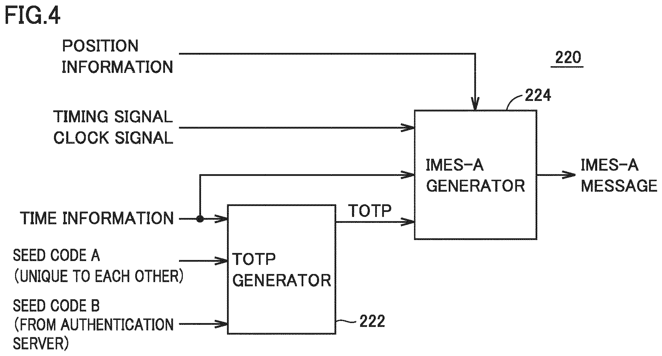

Fig. 4 is a schematic diagram showing exemplary processing for generating a TOTP and an IMES-A message in IMES transmitter 200 in position information providing system 1 according to the present embodiment.

Referring to Fig. 4, IMES-A generator and transmitter 220 of IMES transmitter 200 dynamically generates a TOTP from source information provided from management station 100 and generates an IMES-A message including the generated TOTP.

In the present embodiment, the TOTP is generated from time information managed in IMES transmitter 200 and a secure code called a seed code. Since time information is updated each time, the TOTP is also updated each time.

More specifically, IMES-A generator and transmitter 220 includes a TOTP generator 222 and an IMES-A generator 224. TOTP generator 222 accepts time information and a seed code (a seed code A or a seed code B) as inputs, and calculates a TOTP from two input variables. For TOTP generator 222, a TOTP generation function that uses time information and a seed code as inputs is used.

Seed code A which is a specific code unique for each IMES transmitter 200 or seed code B which is a unique specific code provided from authentication server 400 is used as the seed code. When seed code A is used, a value thereof is concealed from a component other than authentication server 400. When seed code B is used, a seed code provided from authentication server 400 for each IMES transmitter 200 is transmitted as a part of a source signal.

TOTP generator 222 and seed code A should securely be kept, and these functions may be implemented, for example, by using a security chip referred to as a trusted platform module (TPM) that provides tampering resistance based on hardware.

A hash-based message authentication code (HMAC) is typically adopted for the TOTP. In this case, a cryptographic hash function is used for the TOTP generation function. For example, an algorithm in conformity with RFC6238 (TOTP: time-based one-time password algorithm) representing technical specifications defined by Internet engineering task force (IETF) may be adopted as the TOTP generation function.

More specifically, a hash function secure hash algorithm (SHA)-2 (for example, SHA-256 having a hash length of 256 bits or SHA-512 having a hash length of 512 bits among defined variations) may be adopted as the TOTP generation function. By using the TOTP generation function configured with such a hash function, a TOTP according to the HMAC can be generated.

The bit length of the TOTP is preferably longer. In consideration of a cycle of update of a message or a transmission band, however, for example, a 64-bit length or a 128-bit length can be adopted.

A cycle of generation of a TOTP in IMES-A generator and transmitter 220 preferably matches with a cycle of transmission of an IMES-A signal. For example, when an IMES-A message is updated every three seconds, the TOTP is also preferably generated (updated) every three seconds. A length of the generated TOTP is also preferably designed to a length suitable for a message format of the IMES-A message.

IMES-A generator 224 generates an IMES-A message by combining the TOTP generated by TOTP generator 222, time information, a timing signal, and a clock signal included in the source signal, and position information set for each IMES transmitter 200. IMES-A generator 224 modulates the generated IMES-A message and transmits the modulated IMES-A message as the IMES-A signal.

Since there is some kind of delay factor in transmission path 2 from management station 100 to IMES transmitter 200, in IMES transmitter 200, time information synchronous with management station 100 can be held by using the time information, the timing signal, the clock signal, and the like provided from management station 100.

Security performance of seed code A and seed code B will now be described. Seed code A is stored in IMES transmitter 200, and high tampering can be achieved, for example, by implementation using the TPM or the like. In the event that IMES transmitter 200 is cracked with some method and seed code A leaks, availability of position information providing system 1 may lower.

On the assumption that such a situation may occur, a configuration in which seed code B is dynamically provided from authentication server 400 may be adopted. A cycle of update of seed code B provided from authentication server 400 to each IMES transmitter 200 is determined as appropriate depending on capability of position information providing system 1 and a required security level. By dynamically providing the seed code from authentication server 400, the security level can further be enhanced.

As will be described next, a generation algorithm identical to the generation algorithm described above for generating a TOTP in IMES transmitter 200 is also implemented in authentication server 400.

### <E. Synchronization of TOTP Between IMES Transmitter and Authentication Server>

A method of generating a TOTP in synchronization between IMES transmitter 200 and authentication server 400 will now be described. By synchronizing the TOTP between the IMES transmitter and the authentication server in accordance with a scheme as will be described below, both of them can know a true value of the TOTP at each time point. In other words, authentication server 400 knows all TOTPs transmitted from IMES transmitters 200.

By utilizing such advance knowledge, with the TOTP added to position information presented by the mobile terminal (IMES receiver 300), authenticity of the position information can be guaranteed.

As described above, in position information providing system 1 according to the present embodiment, the TOTP is dynamically generated with the use of a unique specific code (seed code) allocated to each IMES transmitter 200 and time information on each generation timing. The TOTP has a value unique for each IMES transmitter 200. A cycle of generation (update) of the TOTP is synchronous with a cycle of generation (update) of the IMES-A message (IMES-A signal) by IMES transmitter 200. In other words, authentication server 400 knows a true value of the TOTP generated at arbitrary time by each IMES transmitter 200.

In order for authentication server 400 to reliably know the true value of the TOTP generated by each IMES transmitter 200, two conditions of (1) holding in synchronization, of time information provided from a time source in common between IMES transmitter 200 and authentication server 400 and (2) knowledge by authentication server 400, of the seed code allocated to each IMES transmitter 200, should be satisfied.

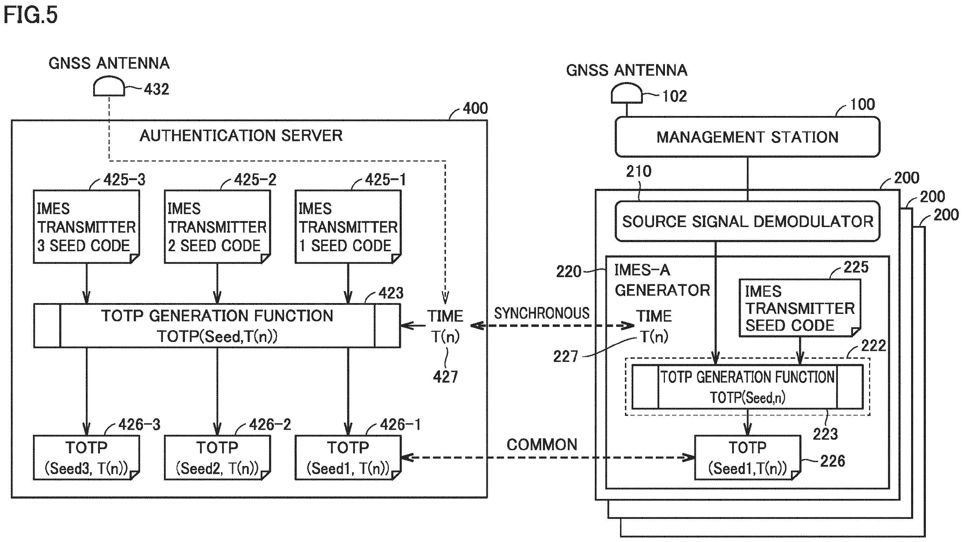

Fig. 5 is a diagram for illustrating a method of synchronizing a TOTP between IMES transmitter 200 and authentication server 400 in position information providing system 1 according to the present embodiment. Referring to Fig. 5, each IMES transmitter 200 periodically generates a TOTP 226 in IMES-A generator and transmitter 220. More specifically, IMES-A generator and transmitter 220 includes TOTP generator 222 (see Fig. 4). As time information 227 and a seed code 225 are provided to a TOTP generation function 223 included in TOTP generator 222, TOTP 226 is generated.

Since time information 227 is varied in accordance with timing n of generation of TOTP 226, it is denoted as "time T(n)" below, and seed code 225 is denoted as "Seed1", "Seed2", "Seed3 ", ... because it is set to a value unique among IMES transmitters 200. TOTP 226 generated from time information 227 and seed code 225 is denoted as "TOTP (Seed1, T(n))" or the like, intending that it is dependent on two variables.

Management station 100 provides time information 227, with a GNSS signal received through GNSS antenna 102 serving as the time source. Source signal demodulator 210 of IMES transmitter 200 receives the source signal from management station 100 and obtains time information 227. This obtained time information 227 is provided to TOTP generation function 223. IMES transmitter 200 obtains time information 227 substantially synchronous with time provided by the GNSS signal.

It is assumed that seed code 225 is provided from authentication server 400, in addition to a case in which it is stored in advance in IMES transmitter 200.

Authentication server 400 holds seed codes 425-1, 425-2, 425-3, ... identical to seed code 225 used by each IMES transmitter 200. Authentication server 400 receives, for example, a GNSS signal received through GNSS antenna 432, and time information 427 obtained from the received GNSS signal can be used.

Furthermore, a TOTP generation function 423 identical in generation algorithm to TOTP generation function 223 held in IMES transmitter 200 can be used also in authentication server 400.

Time information 227 managed by IMES transmitter 200 and time information 427 that can be used in authentication server 400 are obtained from the identical time source, and they can be synchronous with each other with high precision. The seed code is in common between IMES transmitter 200 and authentication server 400.

Authentication server 400 thus holds all pieces of information used for generation of TOTP 226 by each IMES transmitter 200. Consequently, authentication server 400 can successively generate TOTPs 426-1, 426-2, 426-3, ... identical in value to TOTP 226 generated at each time by each IMES transmitter 200. Since authentication server 400 does not have to provide TOTP 426 to the outside, it may reproduce TOTP 426 only when the mobile terminal (IMES receiver 300) issues a request to do so.

Typically, two methods below are assumed as an approach to commonality of the seed code between IMES transmitter 200 and authentication server 400.

### (1) Off-Line Commonality Approach

In an off-line commonality approach, a seed code is permanently stored in advance in each IMES transmitter 200, and authentication server 400 manages the seed code permanently allocated to IMES transmitter 200.

Specifically, authentication server 400 knows in advance a specific seed code held for each IMES transmitter 200 and generates a TOTP based on the seed code of each IMES transmitter 200 and time information at each timing.

When the off-line commonality approach is adopted, a network for commonality of the seed code between authentication server 400 and IMES transmitter 200 does not have to be provided. Therefore, a system configuration can advantageously be simplified.

Since the seed code used in common is permanently set, tampering resistance of IMES transmitter 200 and authentication server 400 is relatively low. In the event that the seed code and the generation algorithm leak, a future TOTP may be predicted. Therefore, in adopting the off-line commonality approach, a configuration high in tampering resistance such as the trusted platform module (TPM) is preferably used for implementation. The TPM can also be configured such that, if physical reverse engineering is attempted, an embedded memory is broken so as to prevent a stored value from being read.

### (2) On-Line Commonality Approach

In an on-line commonality approach, authentication server 400 regularly generates a seed code and notifies IMES transmitter 200 of the seed code. In other words, authentication server 400 may perform a function to transmit a seed code (that is, a specific code) to each of at least one IMES transmitter 200.

The seed code is preferably regularly generated for each IMES transmitter 200. A seed code is transmitted from authentication server 400 to each IMES transmitter 200 over an arbitrary network. In position information providing system 1 shown in Fig. 3, the seed code is transmitted from authentication server 400 to management station 100 and further transmitted from management station 100 through transmission path 2 to IMES transmitter 200. Without being limited to the configuration shown in Fig. 3, the seed code may directly be transmitted from authentication server 400 to each IMES transmitter 200.

According to the on-line commonality approach, IMES transmitter 200 and authentication server 400 do not hold information for generating a TOTP in the future beyond a cycle of update of the seed code. Therefore, high tampering resistance can be realized in both of IMES transmitter 200 and authentication server 400.

A network for transmission of a seed code from authentication server 400 to IMES transmitter 200 should be provided. In addition, measures for preventing leakage of the seed code in the transmission path from authentication server 400 to IMES transmitter 200 are required. Therefore, the on-line commonality approach may be more complicated in system configuration than the off-line commonality approach described above.

By using any of the two approaches described above, generation and commonality of the TOTP can securely be achieved. Without being limited to one of the two approaches described above, the two approaches may be combined. Specifically, the seed code stored in advance in IMES transmitter 200 and the seed code distributed by authentication server 400 may be combined to generate a TOTP. Furthermore, any secure method other than the two methods described above can be adopted.

With the approaches described above, commonality of the seed code and the generation algorithm between IMES transmitter 200 and authentication server 400 is achieved, so that an identical TOTP can be generated at each generation timing.

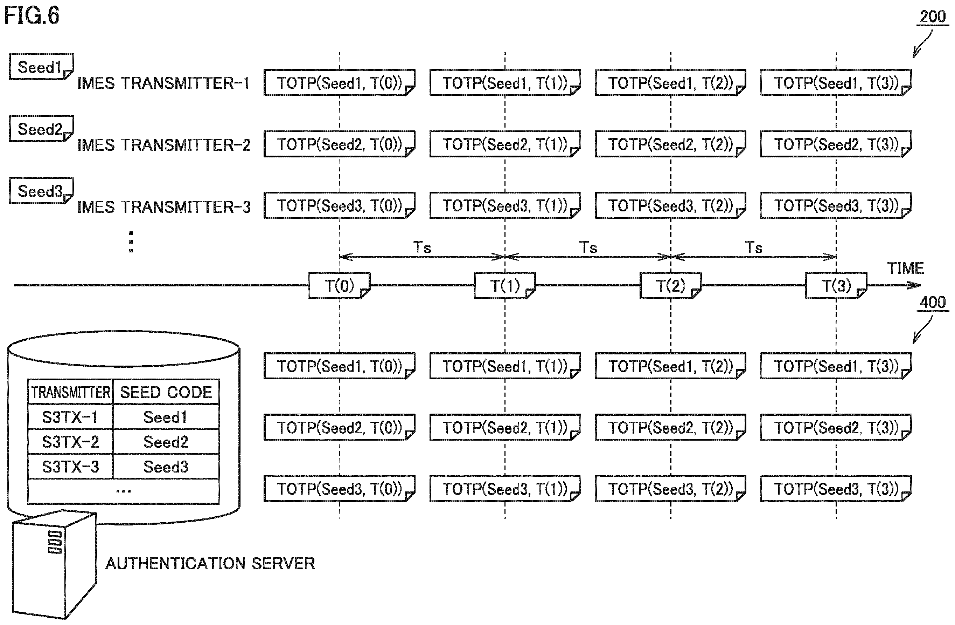

Fig. 6 is a diagram for illustrating processing for generating a TOTP in IMES transmitter 200 and authentication server 400 in position information providing system 1 according to the present embodiment. Referring to Fig. 6, all IMES transmitters 200 and authentication server 400 have synchronous time information, with the GNSS signal or the like serving as the time source.

With timing of generation of a TOTP being denoted as time T(n), time T(n) is incremented in correspondence with a cycle Ts (for example, three seconds) of transmission of an IMES-A message. By using the TOTP (Seed, T(n)) representing the TOTP generation function, an identical TOTP can be generated in each of each IMES transmitter 200 and authentication server 400.

Specifically, at time T(0), IMES transmitters 200-1, 200-2, and 200-3 generate a TOTP (Seed1, T(0)), a TOTP (Seed2, T(0)), and a TOTP (Seed3, T(0)), respectively. Authentication server 400 also generates TOTP (Seed1, T(0)), TOTP (Seed2, T(0)), and TOTP (Seed3, T(0)) for respective IMES transmitters 200-1, 200-2, and 200-3.

This is also applicable to times T(1), T(2), T(3), ...

Authentication server 400 can thus manage a TOTP generated by each IMES transmitter 200.

### <F. Message Format>

An exemplary format of an IMES-A message transmitted from IMES transmitter 200 and an exemplary format in output of information included in an IMES-A message received by IMES receiver 300 will now be described.

### (f1: Message Format of IMES-A Message)

An exemplary message format of an IMES-A message transmitted from IMES transmitter 200 will initially be described. By way of example, in position information providing system 1 according to the present embodiment, an IMES-based signal is adopted. An IMES-A message backward compatible with an existing IMES message is preferred also for the IMES-A message.

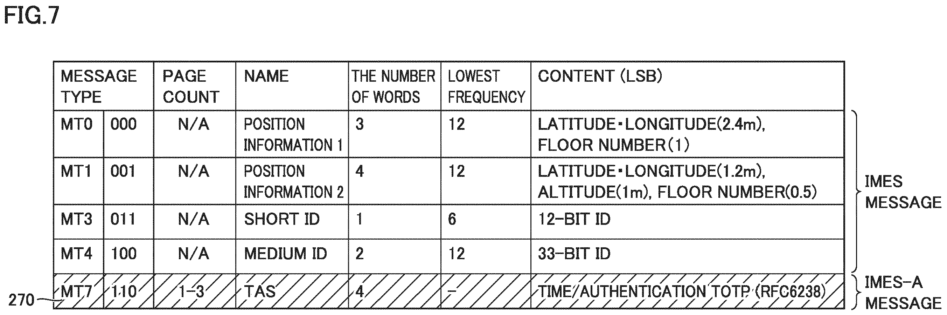

Fig. 7 is a diagram showing an exemplary message type transmitted from IMES transmitter 200 included in position information providing system 1 according to the present embodiment. Referring to Fig. 7, in addition to four message types defined as existing IMES messages, a message format 270 may be adopted as the IMES-A message. The message shown in Fig. 7 is by way of example, and any message format including information necessary for providing position information may be used.

Since MT0, MT1, MT3, and MT4 shown in Fig. 7 have been known, detailed description thereof will not be provided. The message format of MT7 employed as the IMES-A message will be described in detail below.

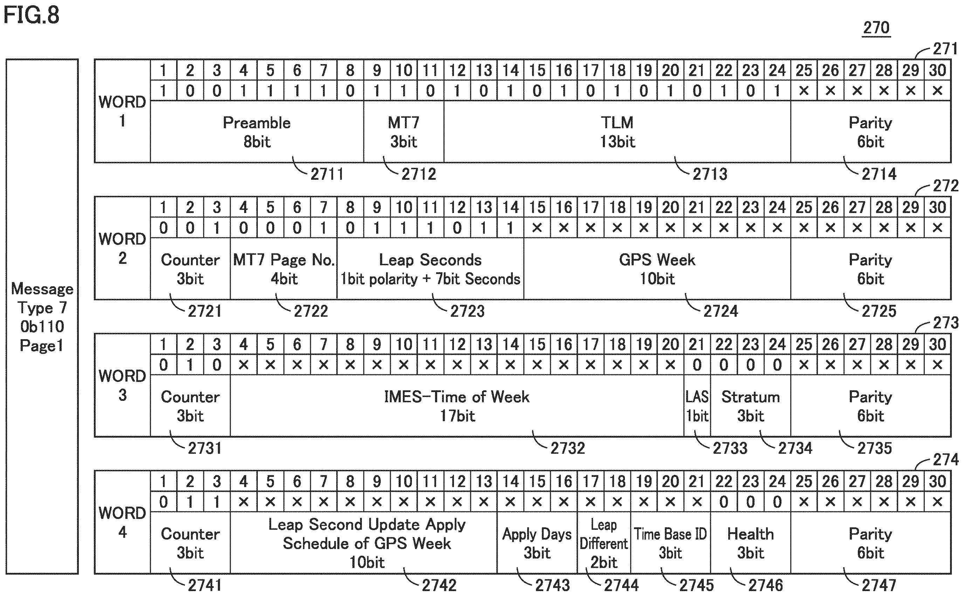

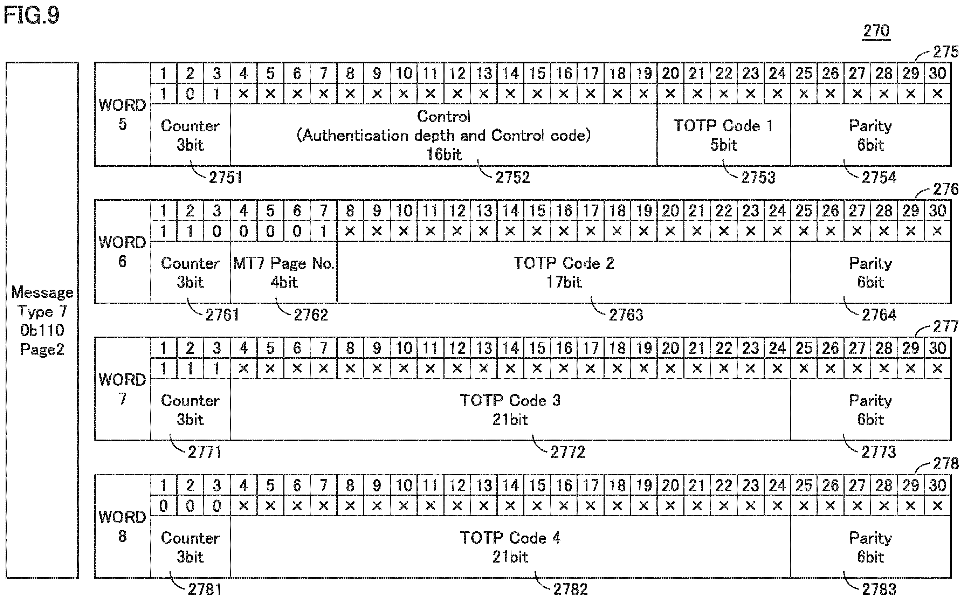

Figs. 8 and 9 are each a diagram showing an exemplary frame structure of message format 270 used as an IMES-A message in position information providing system 1 according to the present embodiment. Message format 270 can be variable in number of words depending on an application. In addition to a case of a message format (four words/for one page) shown in Fig. 8, combination of the message format shown in Fig. 8 and a message format shown in Fig. 9 (eight words in total/for two pages) can also be adopted. Furthermore, combination of the message format shown in Fig. 8 and doubled message formats (four words) shown in Fig. 9 (twelve words in total/for three pages) can also be adopted. A length (the number of words) of such a message format may also be adjustable as appropriate, depending on an application.

A GPS-Nav-message-compatible format may be adopted as message format 270 shown in Fig. 8. When IMES receiver 300 is adapted to the GPS, it includes a message decoder that processes message format 270. Therefore, Christian year, month, day, hour, minute, and second can be obtained as time information, without reconfiguring an existing message decoder.

Specifically, message format 270 is composed of at least four words 271, 272, 273 and 274. Furthermore, in adding the TOTP (authentication code), words 275, 276, 277, and 278 shown in Fig. 9 may be combined. Each of words 271, 272, 273, 274, 275, 276, 277, and 278 is composed of thirty bits.

First word 271 includes a preamble region 2711, a message type region 2712 where information for specifying a message type is stored, a telemetry region 2713 where telemetry information is stored, and a parity bit region 2714.

Second word 272 includes a counter region 2721 where a message count is stored, a message page region 2722, a leap second region 2723, a GPS week region 2724 where weeks elapsed since a reference date (for example, January 6, 1980) are stored, and a parity bit region 2725. In leap second region 2723, information indicating timing of a leap second inserted or deleted and information indicating one of insertion and deletion are stored.

Message format 270 may also be configured across a plurality of pages (four words per one page). Therefore, in message page region 2722, information for specifying an ordinal number of page where each message is on is stored.

Third word 273 includes a counter region 2731, a time of week (TOW) region 2732, an LAS region 2733, a time source region 2734, and a parity bit region 2735. In TOW region 2732, a count value incremented one by one every 1.5 second is stored, with AM 0:00 on Sunday being defined as the starting point. When message format 270 is transmitted every three seconds, between a preceding IMES-A message and an IMES message following this IMES-A message, a value in increments of two counts is stored in TOW region 2732. In LAS region 2733, a state value as to whether or not application of a leap second is activated is stored.

Fourth word 274 includes a counter region 2741, a leap second application week region 2742, a leap second application day region 2743, an applied leap second region 2744, a transmitter ID 2745, a satellite healthy region 2746, and a parity bit region 2747. Timing of application of a leap second is scheduled based on elapsed weeks stored in leap second application week region 2742 and a day in a week stored in leap second application day region 2743. In applied leap second region 2744, magnitude of an applied leap second is defined. For example, whether or not to apply "one second" as a leap second or information indicating whether or not to apply "one second" is stored in applied leap second region 2744. In transmitter ID 2745, identification information for specifying IMES transmitter 200 that has generated an IMES-A message is stored.

Referring to Fig. 9, words 275, 276, 277, and 278 in message format 270 provide regions for transmitting a TOTP. As will be described later, words 275, 276, 277, and 278 can transmit a TOTP of 64 bits in total. By successively transmitting message formats the same as words 275, 276, 277, and 278, a TOTP of 128 bits can be transmitted.

Fifth word 275 includes a counter region 2751, a control region 2752, a TOTP region 2753, and a parity bit region 2754. In control region 2752, a control code indicating a procedure necessary for position authentication processing using the TOTP is stored. In TOTP region 2753, six bits of data with which the TOTP is configured are stored.

Sixth word 276 includes a counter region 2761, a message page region 2762, a TOTP region 2763, and a parity bit region 2764. In TOTP region 2763, seventeen bits of data with which the TOTP is configured are stored.

Seventh word 277 includes a counter region 2771, a TOTP region 2772, and a parity bit region 2773. In TOTP region 2772, twenty-one bits of data with which the TOTP is configured are stored. Eighth word 278 includes a counter region 2781, a TOTP region 2782, and a parity bit region 2783 similarly to seventh word 277.

### (f2: NMEA Format Provided from IMES Receiver 300)

An exemplary message format used on an application level in IMES receiver 300 will now be described. An expanded version of an existing NMEA format may be adopted as such a message format.

Specifically, information obtained by reception by IMES receiver 300, of an IMES-A message transmitted from IMES transmitter 200 and decoding of the received IMES-A message may be provided, for example, in a format pursuant to the format used in output of reception data from a general GPS reception module.

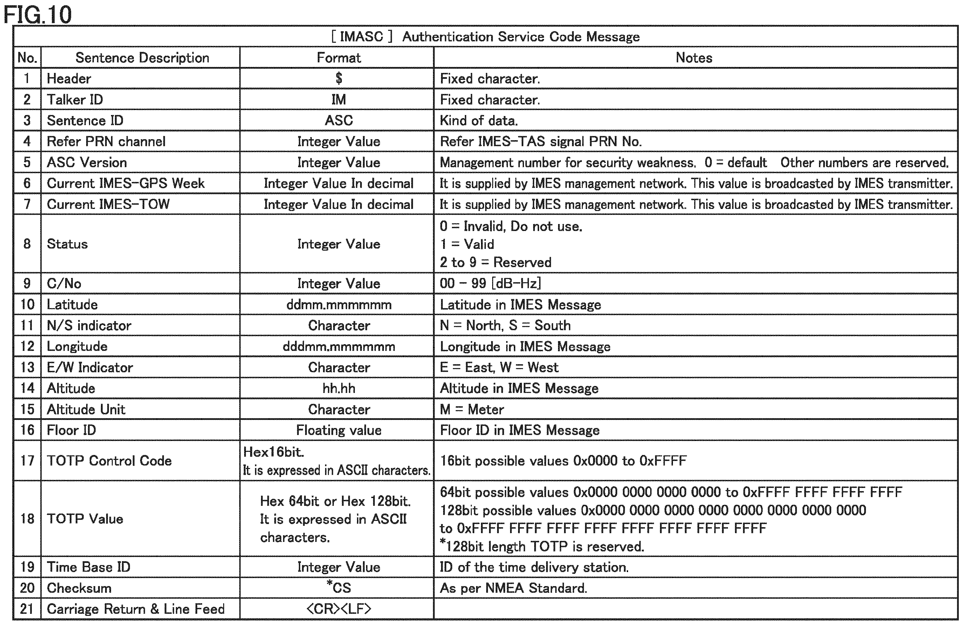

Fig. 10 is a diagram showing an exemplary message format involved with position authentication processing provided from IMES receiver 300 included in position information providing system 1 according to the present embodiment. A message format illustrated in Fig. 10 represents an exemplary message format (IMASC) directed to a TOTP (authentication code) necessary for position authentication processing. In an IMASC message shown in Fig. 10, in addition to position information, an authentication code (TOTP) brought in correspondence with the position information is stored.

Without being limited to the message format shown in Fig. 10, such a message format as allowing various applications executed on IMES receiver 300 to easily use information included in an IMES-A message is preferably adopted.

### <G. Configuration of IMES Receiver>

A configuration of IMES receiver 300 will now be described. For example, a mobile terminal such as a portable telephone and a smartphone is assumed as IMES receiver 300.

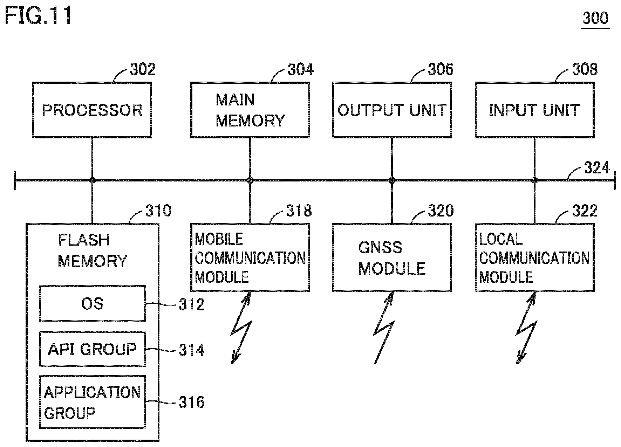

Fig. 11 is a schematic diagram showing an exemplary hardware configuration of IMES receiver 300 that can be used in position information providing system 1 according to the present embodiment. Referring to Fig. 11, IMES receiver 300 includes a processor 302, a main memory 304, an output unit 306, an input unit 308, a flash memory 310, a mobile communication module 318, a GNSS module 320, and a local communication module 322. For example, an operating system (OS) 312, an application program interface (API) group 314, and an application group 316 are stored in flash memory 310. These elements are connected through an internal bus 324.

Processor 302 performs various functions by executing a program stored in flash memory 310 by developing the program on main memory 304. Main memory 304 is implemented by a volatile memory such as a dynamic random access memory (DRAM) or a static random access memory (SRAM).

Output unit 306 encompasses a device that notifies a user of a result obtained by computing processing by processor 302. For example, output unit 306 includes a display or an indicator for visually giving information to a user, and in this case, the output unit is implemented by a liquid crystal display (LCD) or an organic electroluminescence (EL) display. Alternatively, output unit 306 includes a microphone for aurally giving information to the user.

Input unit 308 is a device that accepts an operation from a user, and it is implemented, for example, by a touch panel arranged on a surface of the display, a keyboard, a mouse, and the like.

Flash memory 310 is a non-volatile memory, and various programs and data are stored therein. OS 312 provides an environment for execution of various applications in IMES receiver 300. API group 314 is responsible for basic processing necessary for performing processing in application group 316. Application group 316 includes various user applications.

Mobile communication module 318 provides a public wireless communication function such as long term evolution (LTE). Mobile communication module 318 exchanges data with a counterpart through a wireless base station.

GNSS module 320 receives a GNSS signal and obtains information included in the received GNSS signal. When an IMES-A signal is compatible with the GNSS signal, GNSS module 320 can receive also the IMES-A signal in addition to the GNSS signal. In this case, information included in an IMES-A message as described above is obtained by GNSS module 320 and used for processing performed in processor 302.

Local communication module 322 exchanges data with another communication terminal, for example, under wireless communication standards such as wireless local area network (LAN) or Bluetooth®.

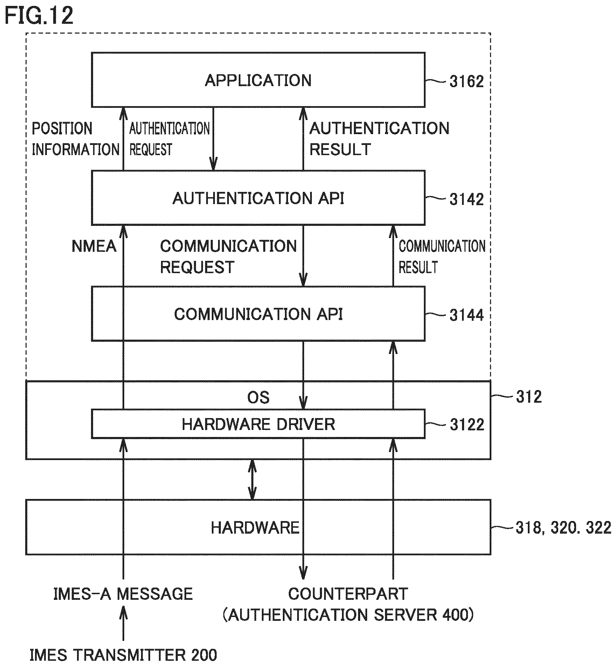

Fig. 12 is a schematic diagram showing an exemplary software configuration of IMES receiver 300 that can be used in position information providing system 1 according to the present embodiment. Fig. 12 mainly shows a configuration in which an authentication function provided by position information providing system 1 is used.

More specifically, in IMES receiver 300, an application 3162 and an authentication API 3142 and a communication API 3144 are executed on OS 312. For example, an application for receiving arbitrary services by using authenticated position information is assumed as application 3162.

OS 312 includes a hardware driver 3122. Hardware driver 3122 performs necessary processing by controlling various hardware elements (for example, mobile communication module 318, GNSS module 320, and local communication module 322 shown in Fig. 11) included in IMES receiver 300.

Authentication API 3142 is a program responsible for position authentication processing as will be described later. Authentication API 3142 performs position authentication processing between authentication API 3142 and authentication server 400 in response to an authentication request from application 3162 and gives a result of performed position authentication processing back to application 3162. Authentication API 3142 can also obtain information included in an IMES-A message from hardware driver 3122, and pass position information included therein to application 3162.

Information may be exchanged between hardware driver 3122 and authentication API 3142, for example, in accordance with the NMEA format.

Communication API 3144 is a program responsible for communication processing. In position authentication processing according to the present embodiment, in response to a communication request from authentication API 3142, the communication API transmits necessary data to authentication server 400 through hardware driver 3122 and gives data from authentication server 400 back to the authentication API, as a communication result.

By configuring such hierarchical software elements composed of hardware driver 3122 as well as authentication API 3142 and communication API 3144, programming in using the authentication function according to the present embodiment can be facilitated from a point of view of a creator of application 3162. In other words, since an authentication result is given back from the application 3162 side simply by giving an authentication request to authentication API 3142, the authentication function according to the present embodiment can readily be incorporated in an existing application.

### <H. Configuration of Authentication Server 400>

A configuration of authentication server 400 will now be described. Authentication server 400 is typically implemented by a general-purpose server type computer.

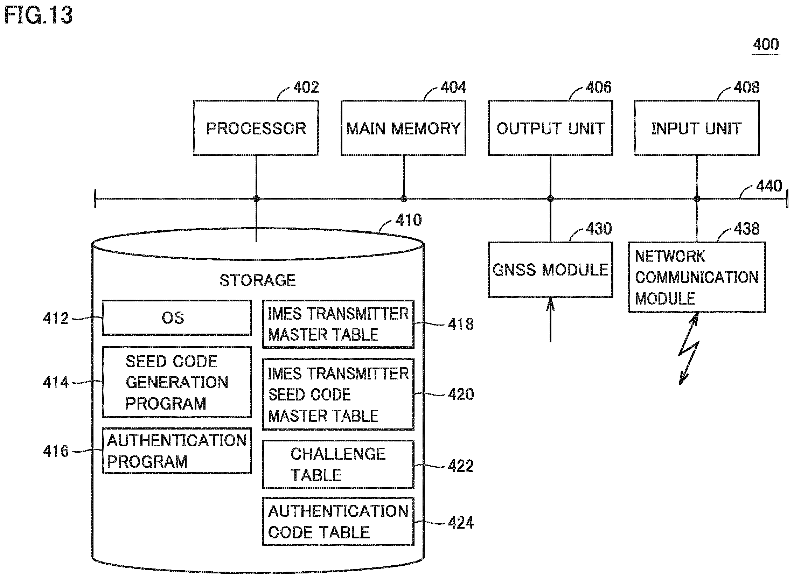

Fig. 13 is a schematic diagram showing an exemplary hardware configuration of authentication server 400 included in position information providing system 1 according to the present embodiment. Referring to Fig. 13, authentication server 400 includes a processor 402, a main memory 404, an output unit 406, an input unit 408, a storage 410, a GNSS module 430, and a network communication module 438. For example, an OS 412, a seed code generation program 414, an authentication program 416, an IMES transmitter master table 418, an IMES transmitter seed code master table 420, a challenge table 422, and an authentication code table 424 are stored in storage 410. These elements are connected through an internal bus 440.

Processor 402 performs various functions by executing a program stored in storage 410 by developing the program on main memory 404. Main memory 404 is implemented by a volatile memory such as a DRAM or an SRAM.

Output unit 406 encompasses a device that notifies a user of a result obtained by computing processing by processor 402. For example, output unit 406 includes a display or an indicator for visually giving information to a user, and in this case, the output unit is implemented by a liquid crystal display (LCD) or an organic electroluminescence (EL) display.

Input unit 408 is a device that accepts an operation from a user, and it is implemented, for example, by a keyboard and/or a mouse.

Storage 410 is a non-volatile storage for storing various programs and data, and it is implemented, for example, by a hard disk drive (HDD). OS 412 provides an environment for execution of various applications in authentication server 400. Seed code generation program 414 generates a seed code for each IMES receiver 300 every prescribed cycle. Authentication program 416 performs position authentication processing as will be described later.

IMES transmitter master table 418 includes information for managing IMES receiver 300. More specifically, IMES transmitter master table 418 includes identification information (an individual ID) allocated to each IMES receiver 300 and position information (a latitude, a longitude, a floor, and the like).

IMES transmitter seed code master table 420 includes a value of a seed code allocated to each IMES receiver 300.

Challenge table 422 is a table for managing a value of a challenge issued upon receiving a position authentication request from any IMES receiver 300. In challenge table 422, a value of a challenge at the time point of issuance thereof is written, and when a validity period set for each challenge expires, entry thereof is erased.

Authentication code table 424 is a table for managing an authentication code issued as a result of a series of successful position authentication processing. In authentication code table 424, a value of the authentication code is written at the time point of issuance thereof in the series of position authentication processing, and when a validity period set for each authentication code expires, entry thereof is erased.

GNSS module 430 receives a GNSS signal and obtains time information or the like included in the received GNSS signal. Time information obtained by GNSS module 430 is used for position authentication processing.

Network communication module 438 exchanges data with management station 100, IMES transmitter 200, or IMES receiver 300 over an arbitrary network.

### <I. Position Authentication Processing Using TOTP>

Details of a method of providing position information including position authentication processing in position information providing system 1 according to the present embodiment will now be described. In position information providing system 1 according to the present embodiment, a value of a TOTP included in an IMES-A message generated at each transmission timing by specific IMES transmitter 200 is unique and unlike those of other IMES transmitters 200 and other transmission timing. In other words, TOTPs included in IMES-A messages transmitted from a plurality of IMES transmitters 200 at identical transmission timing are different in value from one another. TOTPs transmitted from different timing from identical IMES transmitter 200 are also different in value from one another.

Since authentication server 400 thus has time information synchronous with IMES transmitter 200, it can fully know which IMES transmitter 200 broadcasts what kind of TOTP. In other words, by adopting the TOTP according to the present embodiment, authenticity of position information included in the IMES-A message can be guaranteed.

Since IMES transmitter 200 broadcasts an IMES-A message to a large number of unspecified destinations, position information and time information included in the IMES-A message have already been known. Therefore, in order to satisfy a security requirement against "spoofing" of such information, two-stage authentication including TOTP-based challenge response (challenge handshake authentication protocol (CHAP)) authentication in addition to authentication of a TOTP as will be described in detail below is preferably adopted. By adopting such two-stage authentication, spoofing can be prevented.

In other words, though authenticity of position information included in an IMES-A message can be guaranteed by using the TOTP according to the present embodiment, two-stage authentication is adopted as a more preferred form.

In the description below, position authentication processing with two-stage authentication being adopted is mainly described. In two-stage authentication, first-stage authentication is denoted as "TOTP authentication" and second-stage authentication is denoted as "TOTP & CHAP authentication."

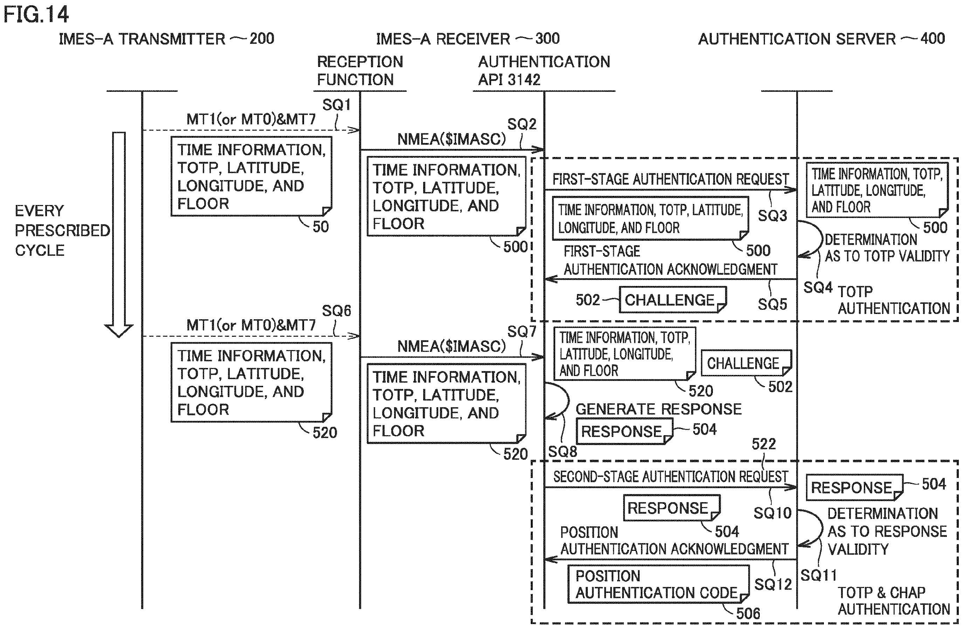

Fig. 14 is a sequence diagram illustrating overview of position authentication processing in position information providing system 1 according to the present embodiment. Referring to Fig. 14, in position information providing system 1, authentication of position information is implemented by coordination among IMES transmitter 200, IMES receiver 300, and authentication server 400.

Referring to Fig. 14, initially, IMES transmitter 200 transmits an IMES-A message every prescribed cycle (sequence SQ1). A plurality of message formats may be defined for the IMES-A message, depending on a type of information to be transmitted. For example, in existing IMES specifications, position information is included in a message type 0 (MT0) and a message type 1 (MT1). Therefore, IMES transmitter 200 transmits an IMES message including position information in conformity with MT0 or MT1. In addition, IMES transmitter 200 transmits an IMES-A message including a TOTP generated at the same transmission timing. For example, a TOTP may be transmitted in accordance with a message format defined as a message type 7 (MT7), in such a form that a message format defined in the existing IMES specifications is expanded.

Each IMES transmitter 200 thus performs a generation function to generate a TOTP (that is, an authentication code) and a transmission function to transmit an IMES-A message including position information and time information and the generated TOTP (authentication code), depending on time and a seed code (that is, a specific code) uniquely allocated to each IMES transmitter 200.

IMES receiver 300 obtains IMES-A information 500 including time information (time and day) and information on a TOTP, a latitude, a longitude, a floor, and the like, by receiving a message format in conformity with MT0 or MT1 and a message in conformity with MT7 from IMES transmitter 200. IMES-A information 500 is obtained by a reception function (GNSS module 320 shown in Fig. 11 and hardware driver 3122 shown in Fig. 12) of IMES receiver 300.

In IMES receiver 300, IMES-A information 500 is provided from the reception function to authentication API 3142 (sequence SQ2). At this time, IMES-A information 500 may be provided in accordance with a prescribed format defined as the NMEA format.

Authentication API 3142 performs position authentication processing between authentication API 3142 and authentication server 400 based on obtained IMES-A information 500. When authentication server 400 receives an authentication request including information in the IMES-A message from IMES receiver 300 that has received the IMES-A message transmitted from any IMES transmitter 200 of at least one IMES transmitter 200, authentication server 400 determines validity of the TOTP (authentication code) included in the authentication request based on time information included in the authentication request and a seed code (specific code) uniquely allocated to IMES transmitter 200 corresponding to the position information included in the authentication request (see Figs. 5 and 6 and the like). Based on a result of determination of validity of the TOTP (authentication code), authenticity of position information included in the authentication request from IMES receiver 300 is authenticated (sequences SQ3 to SQ5 and sequences SQ8 to SQ11 shown in Fig. 14). Furthermore, authentication server 400 has position information authenticity of which was certified stored in storage 410 (authentication code table 424) (sequence SQ12 shown Fig. 14).

More specifically, authentication API 3142 transmits IMES-A information 500 including the TOTP to authentication server 400 as first-stage authentication (TOTP authentication) in the position authentication processing (sequence SQ3). Transmission of IMES-A information 500 to authentication server 400 means a first-stage authentication request.

When authentication server 400 receives IMES-A information 500 from authentication API 3142, it determines validity of the TOTP based on received IMES-A information 500 (sequence SQ4).

When the TOTP is determined as being valid, authentication server 400 transmits to authentication API 3142, an authentication acknowledgment notification 502 including a challenge associated with the TOTP validity of which was confirmed (sequence SQ5).

Transmission of authentication acknowledgment notification 502 from authentication server 400 to authentication API 3142 means successful first-stage authentication. Then, second-stage authentication in position authentication processing is started.

More specifically, when new transmission timing comes, IMES transmitter 200 transmits a new IMES-A message (sequence SQ6). When the reception function of IMES transmitter 200 receives the new IMES-A message, it provides IMES-A information 520 included in the received new IMES-A message to authentication API 3142 (sequence SQ7).

Authentication API 3142 generates a response (determination target) 504 based on the challenge included in previously received authentication acknowledgment notification 502 and new IMES-A information 520 (sequence SQ8). Then, authentication API 3142 transmits a second-stage authentication request 522 including generated response (determination target) 504 to authentication server 400 (sequence SQ10). Transmission of this response (determination target) 504 means a second-stage authentication request.

When authentication server 400 receives second-stage authentication request 522 from authentication API 3142, it determines validity of response (determination target) 504 included in received second-stage authentication request 522 (sequence SQ11).

When response (determination target) 504 is determined as being valid, authentication server 400 responds to authentication API 3142 that it has acknowledged position authentication (sequence SQ12). The authentication server may transmit an authentication code 506 indicating acknowledgment of position authentication to authentication API 3142. Authentication code 506 can be used as a certificate that authentication server 400 guarantees authenticity of position information.

Authentication server 400 thus issues authentication code 506 corresponding to the position information authenticity of which was certified. Then, position information authenticity of which was certified and the issued authentication code are stored in storage 410 of authentication server 400 in association with each other.

Authentication server 400 may transmit acknowledgment of position authentication to a service provider that requests for authenticity of position information presented by IMES receiver 300, rather than authentication API 3142.

The series of position authentication processing is completed by the procedure above. Further detailed processing contents in first-stage and second-stage authentication will be described below.

### (i1: TOTP Authentication (First-Stage Authentication))

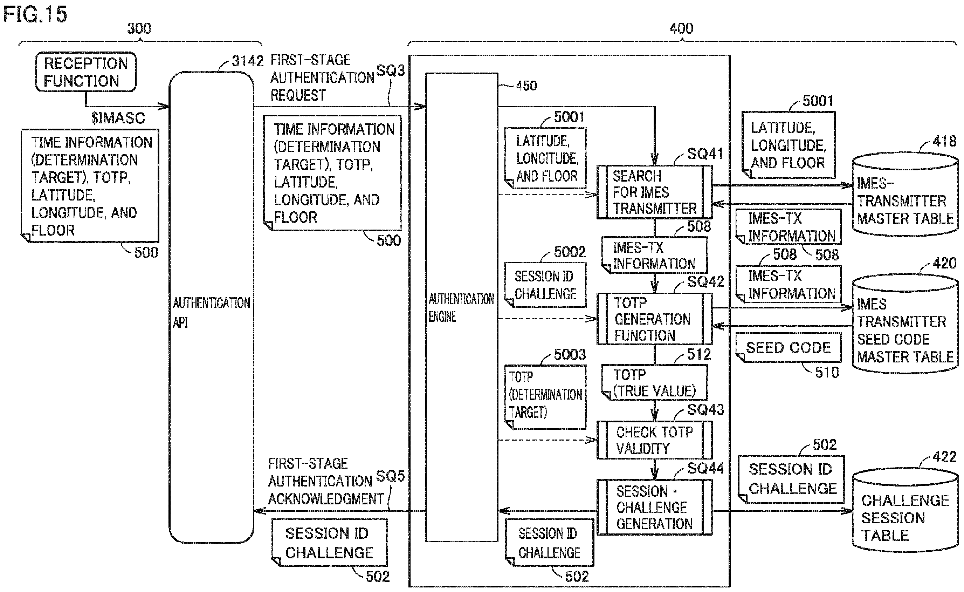

Fig. 15 is a diagram for illustrating first-stage authentication in the position authentication processing in position information providing system 1 according to the present embodiment. Referring to Fig. 15, when the reception function of IMES receiver 300 receives an IMES-A message, it extracts IMES-A information 500 from the received IMES-A message and provides the IMES-A information to authentication API 3142. IMES-A information 500 typically includes time information and information on a TOTP, a latitude, a longitude, a floor, and the like. Such IMES-A information 500 may be provided as an IMASC message defined in conformity with the NMEA format.

Authentication API 3142 of IMES receiver 300 transmits IMES-A information 500 to authentication server 400 and requests the authentication server to perform first-stage authentication (TOTP authentication) (corresponding to sequence SQ3 shown in Fig. 14).

In authentication server 400, an authentication engine 450 implemented by execution of authentication program 416 by processor 402 (see Fig. 13 for both of them) manages position authentication processing. Sequence SQ4 shown in Fig. 14 mainly includes processing in sequences SQ41 to SQ44 shown in Fig. 15.

More specifically, authentication server 400 searches for IMES transmitter 200 corresponding to position information 5001 based on position information 5001 included in IMES-A information 500 received from IMES receiver 300 (sequence SQ41). More specifically, authentication server 400 extracts position information 5001 from IMES-A information 500 and obtains IMES-TX information 508 for specifying IMES transmitter 200 that transmits position information 5001 by referring to IMES transmitter master table 418. Position information 5001 includes a latitude, a longitude, a floor, and the like. IMES-TX information 508 includes identification information (individual ID) allocated to IMES receiver 300 that transmits position information 5001.

When the authentication server is unable to obtain corresponding IMES-TX information 508, the authentication request is determined as fail and position authentication processing is terminated.

In succession, authentication server 400 generates a TOTP (true value) 512 corresponding to received IMES-A information 500 based on obtained IMES-TX information 508 and time information 5002 included in IMES-A information 500 received from IMES receiver 300 (sequence SQ42). More specifically, authentication server 400 obtains a seed code 510 corresponding to IMES-TX information 508 by referring to IMES transmitter seed code master table 420. Then, authentication server 400 generates TOTP (true value) 512 by entering obtained time information 5002 and seed code 510 into a TOTP generation function.

In succession, authentication server 400 checks validity of a TOTP (determination target) 5003 included in IMES-A information 500 received from IMES receiver 300 (sequence SQ43). More specifically, authentication server 400 determines whether or not TOTP (determination target) 5003 included in IMES-A information 500 received from IMES receiver 300 matches with TOTP (true value) 512. TOTP (true value) 512 follows a TOTP generation schedule in IMES transmitter 200 managed in authentication server 400. When TOTP (determination target) 5003 does not match with TOTP (true value) 512, TOTP (determination target) 5003 can be determined as being fraudulent. In this case, the authentication request is determined as fail and position authentication processing is stopped.

In succession, authentication server 400 generates a session and a challenge corresponding to TOTP (determination target) 5003 determined as being valid (sequence SQ44). More specifically, authentication server 400 sets the session to be used in second-stage authentication and allocates a session ID for specifying the allocated session to IMES receiver 300 from which the authentication request was issued. The session ID is preferably randomly determined. Authentication server 400 generates the challenge in accordance with an arbitrary function. The arbitrary function may determine a challenge under prescribed rules or randomly.

Then, authentication server 400 transmits authentication acknowledgment notification 502 including the allocated session ID and the generated challenge to IMES receiver 300 from which the authentication request was issued.

When authentication server 400 thus determines the TOTP (authentication code) included in the authentication request as being valid, it performs processing for generating a challenge and transmitting the challenge to IMES receiver 300 from which the authentication request was issued and processing for generating a session for IMES receiver 300 which is the sender of the authentication request and transmitting the generated session to IMES receiver 300 which is the sender of the authentication request.

Concurrently with transmission of authentication acknowledgment notification 502, authentication server 400 has a set of the allocated session ID and the generated challenge temporarily stored in challenge table 422. A validity period is set in advance for information stored in challenge table 422, and when the validity period expires, the stored information is invalidated. In other words, information stored in challenge table 422 is effectively referred to in second-stage authentication until the validity period set in advance expires.

Authentication server 400 transmits to authentication API 3142, authentication acknowledgment notification 502 including the challenge associated with the TOTP validity of which was confirmed (sequence SQ5). Transmission to this authentication API 3142 means approval response to first-stage authentication. Then, the process continues to second-stage authentication.

### (i2: TOTP & CHAP Authentication (Second-Stage Authentication))

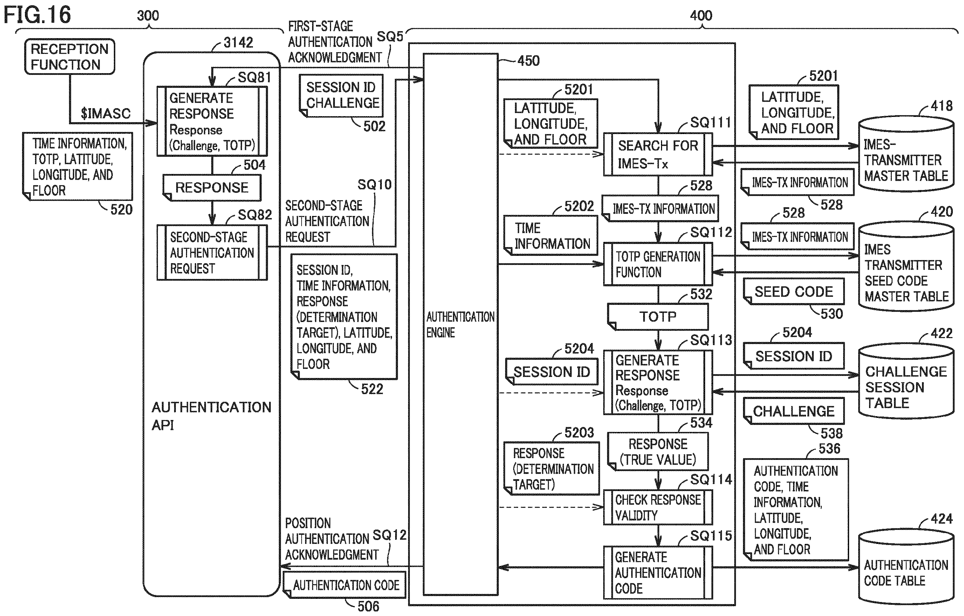

Fig. 16 is a diagram for illustrating second-stage authentication in the position authentication processing in position information providing system 1 according to the present embodiment. Referring to Fig. 16, when authentication API 3142 of IMES receiver 300 receives authentication acknowledgment notification 502 from authentication server 400 (sequence SQ5), it generates response (determination target) 504 (sequence SQ8). More specifically, authentication API 3142 obtains IMES-A information 520 from the reception function. Unlike IMES-A information 500 used in first-stage authentication, IMES-A information 520 includes newer time information and a corresponding TOTP. In other words, time information and the TOTP included in IMES-A information 520 are both updated versions of the time information and the TOTP used in first-stage authentication.

Authentication API 3142 of IMES receiver 300 generates response (determination target) 504 by entering the challenge included in authentication acknowledgment notification 502 received from authentication server 400 in advance and the TOTP included in IMES-A information 520 into a Response (Challenge, TOTP) representing a response generation function (sequence SQ81). The response generation function may adopt a hash-based message authentication code similarly to the TOTP generation function. The response generation function itself is in common between authentication API 3142 and authentication server 400.

Then, authentication API 3142 of IMES receiver 300 transmits second-stage authentication request 522 including generated response (determination target) 504 to authentication server 400 and requests the authentication server to perform second-stage authentication (TOTP & CHAP authentication) (sequence SQ82).

Second-stage authentication request 522 includes a session ID included in authentication acknowledgment notification 502 and time information and position information (a latitude, a longitude, a floor, and the like) included in IMES-A information 520 received from the reception function, in addition to generated response (determination target) 504. Second-stage authentication request 522 is transmitted from IMES receiver 300 to authentication server 400 (corresponding to sequence SQ10 shown in Fig. 14).

Authentication server 400 starts second-stage authentication based on second-stage authentication request 522 received from IMES receiver 300 (sequence SQ11 shown in Fig. 14). Sequence SQ11 shown in Fig. 14 mainly includes processing in sequences SQ111 to SQ115 shown in Fig. 16.

More specifically, authentication server 400 searches for IMES transmitter 200 corresponding to position information 5201 based on position information 5201 included in second-stage authentication request 522 received from IMES receiver 300 (sequence SQ111). More specifically, authentication server 400 extracts position information 5201 from second-stage authentication request 522 and obtains IMES-TX information 528 for specifying IMES transmitter 200 that transmits position information 5201 by referring to IMES transmitter master table 418.

When the authentication server is unable to obtain corresponding IMES-TX information 528, the authentication request is determined as fail and position authentication processing is stopped.

Then, authentication server 400 generates TOTP (true value) 512 corresponding to received second-stage authentication request 522 based on obtained IMES-TX information 528 and time information 5202 included in second-stage authentication request 522 received from IMES receiver 300 (sequence SQ112). More specifically, authentication server 400 obtains a seed code 530 corresponding to IMES-TX information 528 by referring to IMES transmitter seed code master table 420. Then, authentication server 400 generates a TOTP (true value) 532 by entering obtained time information 5202 and seed code 530 into a TOTP generation function.

In succession, authentication server 400 generates a response (true value) 534 corresponding to second-stage authentication request 522 received from IMES receiver 300 (sequence SQ113). More specifically, authentication server 400 extracts a session ID 5204 included in second-stage authentication request 522 and obtains an already-issued challenge 538 corresponding to extracted session ID 5204 by referring to challenge table 422. Then, authentication server 400 generates response (true value) 534 by entering generated TOTP (true value) 532 and obtained challenge 538 into a response generation function. For example, authentication server 400 generates response (true value) 534 as a hash value by string concatenation of generated TOTP (true value) 532 and obtained challenge 538 and entry of a result of string concatenation into a response generation function.

In succession, authentication server 400 checks validity of a response (determination target) 5203 included in second-stage authentication request 522 received from IMES receiver 300 (sequence SQ114). More specifically, authentication server 400 determines whether or not response (determination target) 5203 included in second-stage authentication request 522 received from IMES receiver 300 matches with response (true value) 534. Response (true value) 534 is a result of reflection of both of a result of first-stage authentication performed previously and the TOTP generation schedule in IMES transmitter 200 managed in authentication server 400. When response (determination target) 5203 does not match with response (true value) 534, it can be determined that some kind of fraud was made in a process from transmission of authentication acknowledgment notification 502 indicating a result of first-stage position authentication processing until reception of second-stage authentication request 522. In this case, the authentication request is determined as fail and position authentication processing is stopped.

In response to second-stage authentication request 522 including response (determination target) 5203 generated based on the previously transmitted challenge and information in the IMES-A message (IMES-A information 520) newly received in IMES receiver 300 which is a transmission destination of the challenge, authentication server 400 determines validity of response (determination target) 5203 included in second-stage authentication request 522.

In succession, authentication server 400 generates authentication code 506 corresponding to response (determination target) 5203 determined as being valid (sequence SQ115). More specifically, authentication server 400 randomly determines authentication code 506 and transmits the authentication code to IMES receiver 300 from which the authentication request was issued. Concurrently, authentication server 400 has time information and position information (a latitude, a longitude, a floor, and the like) stored in authentication code table 424 in correspondence with authentication code 506 transmitted to IMES receiver 300 from which the authentication request was issued.

Authentication code 506 stored in authentication code table 424 in authentication server 400 corresponds to evidence for proving when and where IMES receiver 300 was present. Therefore, in response to an external request accompanied by the authentication code, authentication server 400 reads position information corresponding to the authentication code included in the request and provides the position information. A validity period may be set in advance for authentication code 506 stored in authentication code table 424.

When two-stage authentication successfully ends, authentication server 400 transmits authentication code 506 to authentication API 3142 of IMES receiver 300 from which the request was sent (sequence SQ12). Then, the series of position authentication processing ends.

### (i3: Consistency of Validity Period and Time)

Management of consistency of the validity period and time in two-stage authentication described above will now be described.

In position information providing system 1 according to the present embodiment, a TOTP generated based on time information and a seed code is used for position authentication processing. There may naturally be a time lag between timing of generation of a TOTP and timing to perform position authentication processing using the TOTP. Therefore, in order to prevent attack by taking advantage of such a time lag, a condition that a time period elapsed since time used for generation of a TOTP is within a validity period or consistency between times may be adopted as a condition for validity of the TOTP.

Three conditions of (1) a validity period of a TOTP, (2) consistency of TOTP generation time, and (3) a session validity period will be described below. One condition may be adopted or a plurality of conditions of these conditions can arbitrarily be combined.

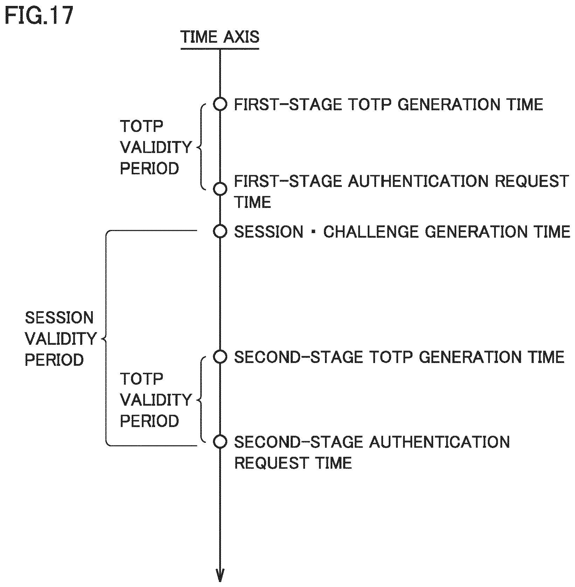

Fig. 17 is a sequence diagram illustrating management of a validity period in position authentication processing in position information providing system 1 according to the present embodiment.

Initially, (1) the validity period of the TOTP will be described. Referring to Fig. 17, for example, in first-stage authentication or second-stage authentication, a TOTP transmitted from IMES receiver 300 to authentication server 400 should be transmitted within a validity period from time of generation of the TOTP.

For example, a condition that time (that is, first-stage authentication request time) of reception by authentication server 400 of IMES-A information 500 including the TOTP to be used in the first-stage authentication request is within a prescribed validity period (that is, a TOTP validity period) from time (that is, first-stage TOTP generation time) indicated by time information used for generation of the received TOTP may be defined as a condition for starting first-stage authentication.

Similarly, a condition that time (that is, second-stage authentication request time) of reception by authentication server 400 of second-stage authentication request 522 including a TOTP to be used in the second-stage authentication request is within a prescribed validity period (that is, a TOTP validity period) from time (that is, second-stage TOTP generation time) indicated in time information used for generation of the received TOTP may be defined as a condition for starting second-stage authentication.

Thus, authentication server 400 determines whether or not the time point of reception of the TOTP (authentication code) is within the validity period set in advance from time indicated in time information used for generation of the TOTP (authentication code), so that the security level can be enhanced.

The TOTP validity period may be set, for example, to approximately thirty seconds in an example in which a cycle of transmission of an IMES-A message is set to three seconds. A length of the TOTP validity period is set as appropriate depending on a required security level.

(2) Consistency of TOTP generation time will now be described. This condition is such that time (second-stage TOTP generation time) indicated in time information used for generation of a TOTP to be used in the second-stage authentication request should be later than first-stage authentication request time. Such consistency of TOTP generation time may be defined as a condition for position authentication processing, in order to prevent such an attack as use again of the TOTP used in the first-stage authentication request.

Finally, (3) the session validity period will be described. This condition is such that an interval between first-stage authentication and second-stage authentication should be accommodated in a validity period. More specifically, a condition that a time period from time (that is, session and challenge generation time) of generation of a session and a challenge by authentication server 400 until time (second-stage authentication request time) of reception of second-stage authentication request 522 by authentication server 400 is within a session validity period is defined as a condition for position authentication processing.

Second-stage authentication request 522 transmitted from authentication API 3142 to authentication server 400 thus includes a session ID (identification information) for specifying a previously set session. Then, authentication server 400 determines whether or not the session specified in second-stage authentication request 522 is within a session validity period set in advance.

The session validity period may be set, for example, to approximately three minutes in an example in which a cycle of transmission of an IMES-A message is set to three seconds. A length of the session validity period is set as appropriate depending on a required security level.

By setting consistency of the validity period and time as above as the condition for position authentication processing, the security level can further be enhanced.

### (i4: Security Enhancement Measures)

In position information providing system 1 according to the present embodiment, sufficient security can be ensured by adopting two-stage authentication described above. In order to further enhance the security level, (1) security enhancement measures using additional information or (2) security enhancement measures using a behavior analysis result may further be taken. By additionally taking such security enhancement measures, the security level of position information providing system 1 can further be enhanced.

### (1) Security Enhancement Measures Using Additional Information

For example, by transmitting additional information from IMES receiver 300 to authentication server 400 in each of the first stage and the second stage, ensured sameness of a session between IMES receiver 300 and authentication server 400 may be authenticated.

In an example in which a mobile terminal is employed as IMES receiver 300, identification information uniquely allocated to each mobile terminal such as international mobile subscriber identity (IMSI) or international mobile equipment identity (IMEI) can be employed as such additional information. Alternatively, when IMES receiver 300 uses public wireless communication, a cell ID indicating a cell to which the IMES receiver is connected can be employed as additional information.

Alternatively, when IMES receiver 300 performs a wireless LAN function, dynamic information such as a service set identifier (SSID) of an access point to which the IMES receiver is connected or a received signal strength indicator (RSSI) can be employed as additional information.

Thus, in addition to information in an IMES-A message provided from the reception function of IEMS receiver 300, identification information or environmental information of IMES receiver 300 independent of the IMES-A message can be used for ensuring sameness of the session. Then, from a point of view of an attacker, a plurality of consistent pieces of information should separately be collected and a degree of difficulty in attack is higher. In other words, by verifying the sameness of the session by using such additional information, spoofing of a user can be prevented.

### (2) Security Enhancement Measures Using Behavior Analysis Result

Security enhancement measures using a behavior analysis result aim to sense abnormality or fraud in position authentication by learning past data.

Position information providing system 1 according to the present embodiment is mainly responsible for certifying authenticity of position information presented by IMES receiver 300. The authenticated position information corresponds to a position where IMES receiver 300 is present at each time point, and a distance over which the IMES receiver can travel per unit time is limited. Change in position information is dependent on a behavior of a user who possesses IMES receiver 300.

For example, by learning a history of travel or a behavior of a user in the past based on change over time in position information, in the event of an attack such as spoofing of the user, such an attack can be sensed. In other words, disguise of a user can be sensed based on behavior analysis. Specifically, by adopting machine learning using such an approach as inductive logic programming (ILP) or reinforcement learning, such disguise of the user or the like can be sensed.

Examples of logics using such a behavior analysis result include below.
- Travel over a distance that cannot be covered during a period from previous authentication until present authentication
- Behaviors greatly different from a past behavior pattern (for example, according to the past behavior history, one is often present within a specific area during daytime on weekdays, whereas position information indicating a position within a different distant area is transmitted at the same time of the day)

Abnormality sensing patterns described above are by way of example, and any abnormality sensing pattern can be determined based on machine learning.

The security enhancement measures as described above can serve not only for improvement in security level but also as an indicator in calculating credibility of position authentication per se to be presented to an application side.

### (i5: Authenticity of Data Exchanged Between IMES Receiver and Authentication Server)

In position information providing system 1 according to the present embodiment, by adopting two-stage authentication described above, sufficient security can be ensured. In order to further enhance the security level, a scheme for guaranteeing authenticity of data exchanged between IMES receiver 300 and authentication server 400 may be provided.

Specifically, by addition by a transmission side apparatus of an electronic signature indicating authenticity to data exchanged between IMES receiver 300 and authentication server 400 and verification by a reception side apparatus of the electronic signature added to received data, authenticity of the received data may be ensured.

By exchanging data with such an electronic signature being added, the security level can further be enhanced. IMES receiver 300 and authentication server 400 may share a secret key by using a known key exchange scheme, or may adopt a public key encryption scheme.

### <J. Exemplary Applications>

Some exemplary applications using position information providing system 1 according to the present embodiment will now be described.

### (j1: Authentication of Position Information and Time Information)

A configuration in which authenticated position information can be added to a file managed in IMES receiver 300 will initially be described.

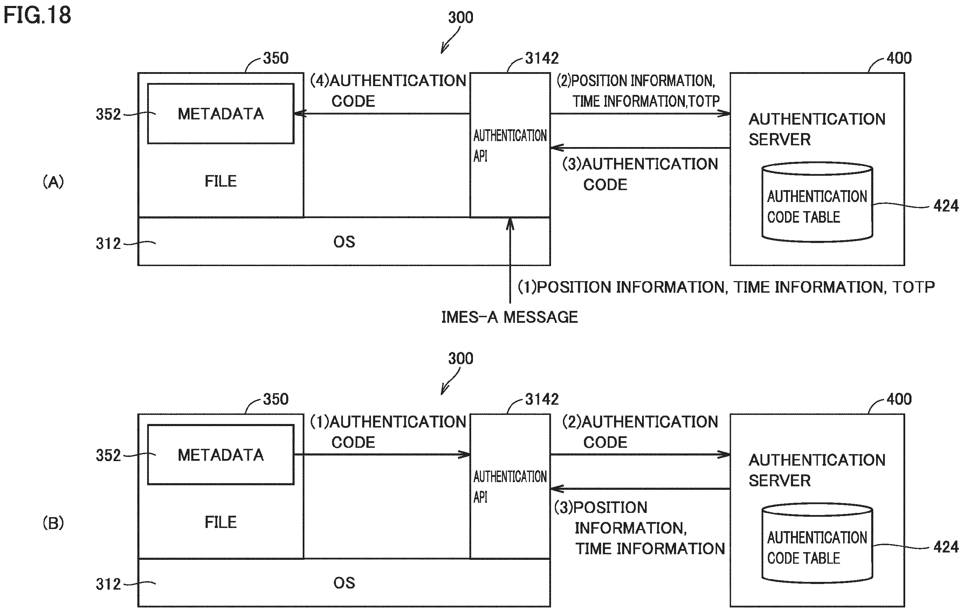

Fig. 18 is a diagram for illustrating an exemplary application of file management using position information providing system 1 according to the present embodiment. Fig. 18 shows such an exemplary application as authenticating position information associated with a file 350 (for example, photographs or moving images) managed by IMES receiver 300 by using metadata 352 of file 350.

Fig. 18 (A) shows exemplary processing in adding position information to metadata 352 of file 350. When OS 312 of IMES receiver 300 generates file 350, OS 312 requests authentication API 3142 to perform position authentication processing. Authentication API 3142 adds an authentication code obtained by position authentication processing as metadata 352 of file 350.

More specifically, by receiving an IMES-A message from any IMES transmitter 200, authentication API 3142 obtains position information, time information, a TOTP, and the like included in the IMES-A message ((1) in Fig. 18 (A)). In succession, by transmitting the obtained position information, time information, and TOTP to authentication server 400, authentication API 3142 performs position authentication processing between the authentication API and authentication server 400 ((2) in Fig. 18 (A)).

When position authentication processing successfully ends, authentication server 400 issues an authentication code to authentication API 3142 ((3) in Fig. 18 (A)). Concurrently, authentication server 400 has information corresponding to the issued authentication code stored in authentication code table 424.

Authentication API 3142 adds the authentication code received from authentication server 400 to metadata 352 of file 350 ((4) in Fig. 18 (A)).

Through processing as above, addition of position information to file 350 is completed.

Fig. 18 (B) shows exemplary processing in using position information added to file 350. When OS 312 or the like of IMES receiver 300 requests the authentication API to give position information added to file 350, authentication API 3142 reads the authentication code added to metadata 352 of file 350 ((1) in Fig. 18 (B)) and transmits the read authentication code to authentication server 400 ((2) in Fig. 18 (B)).

Authentication server 400 searches for information corresponding to the authentication code received from authentication API 3142 by referring to authentication code table 424 and gives information (position information, time information, and the like) obtained by that search to authentication API 3142 ((3) in Fig. 18 (B)).

Authentication API 3142 presents information (position information, time information, and the like) from authentication server 400 as information added to file 350.

Credibility of position authentication per se in addition to the information described above may be given from authentication server 400 to authentication API 3142.

Through a processing procedure as above, when and where a file was generated can be authenticated. As a result of such authentication processing, position information and time information of a subject or the like in some kind of an image file can be obtained with sufficient certainty.

### (j2: Geofence Function)

A configuration capable of providing a Geofence function will now be described. The Geofence function refers to a function to produce some kind of an event or an action upon entry into or exit from an area (a virtual range) registered in advance.

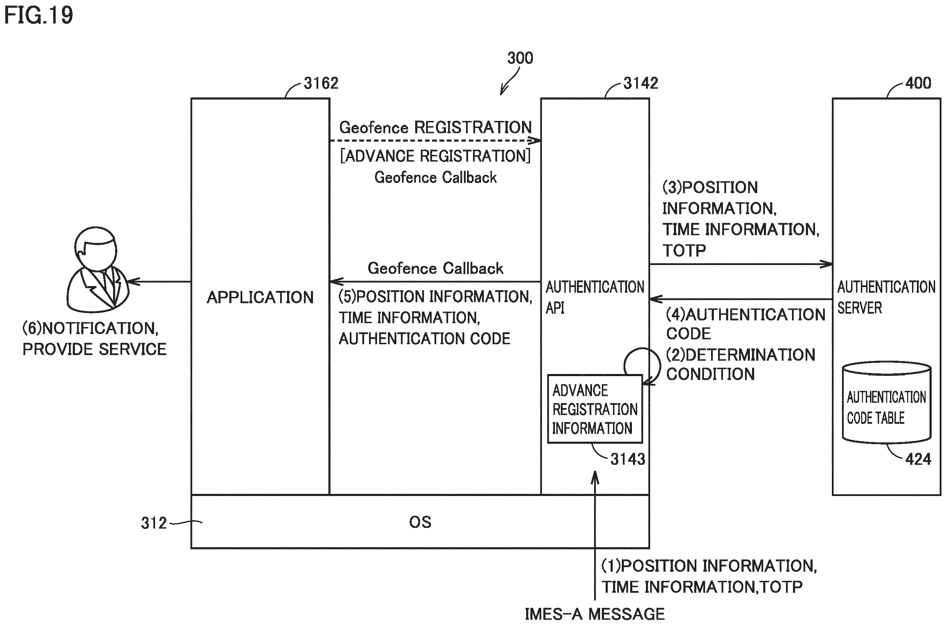

Fig. 19 is a diagram for illustrating an exemplary configuration for providing the Geofence function by using position information providing system 1 according to the present embodiment. Referring to Fig. 19, in IMES receiver 300, it is assumed that application 3162 for providing services using the Geofence function and authentication API 3142 are present on OS 312.

Application 3162 carries out Geofence registration in authentication API 3142 in response to an operation by a user or the like. Geofence registration refers to processing for setting a condition for producing Geofence Callback, and may include, for example, an area defined as a condition and contents of an action or an event produced when the condition is satisfied. Authentication API 3142 has contents in Geofence registration from application 3162 stored as advance registration information 3143.

When advance registration information 3143 is stored and when authentication API 3142 receives an IMES-A message from any IMES transmitter 200, the authentication API obtains position information, time information, a TOTP, and the like included in the IMES-A message ((1) in Fig. 19).

In succession, authentication API 3142 determines whether or not the obtained position information satisfies a condition described in advance registration information 3143 ((2) in Fig. 19).

When the obtained position information is determined as satisfying the condition described in advance registration information 3143, authentication API 3142 transmits the obtained position information, time information, and TOTP to authentication server 400 to perform position authentication processing between the authentication API and authentication server 400 ((3) in Fig. 19). When position authentication processing successfully ends, authentication server 400 issues an authentication code to authentication API 3142 ((4) in Fig. 19). Concurrently, authentication server 400 has information corresponding to the issued authentication code stored in authentication code table 424.

When authentication API 3142 receives the authentication code from authentication server 400, it adds the received authentication code to position information and time information that have been subjected to authentication and provides the resultant information to application 3162 as Geofence Callback ((5) in Fig. 19).

When application 3162 receives Geofence Callback from authentication API 3142, it provides a notification or services to a user depending on contents thereof ((6) in Fig. 19).

When the obtained position information is determined as not satisfying the condition described in advance registration information 3143, authentication API 3142 quits processing on the IMES-A message and waits for start of processing until reception of a next IMES-A message.

Through processing as above, a notification or services in accordance with a position can be provided to the user.

In an application of such a Geofence function, IMES receiver 300 can be used as a kind of an "electronic key." Such an "electronic key" can be used, for example, by a user of car sharing or a hotel guest. An exemplary configuration in application to car sharing will be described below.

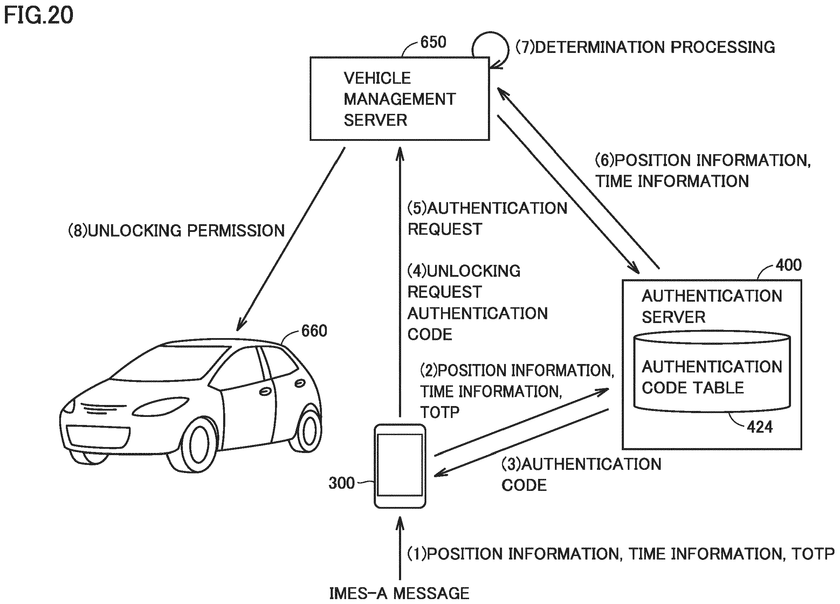

Fig. 20 is a diagram for illustrating an exemplary configuration for implementing a car sharing system by using position information providing system 1 according to the present embodiment. In the configuration shown in Fig. 20, a configuration in which IMES receiver 300 is used as a key of a vehicle 660 to be shared is assumed.

Referring to Fig. 20, a vehicle management server 650 is arranged for managing vehicle 660 to be shared, and vehicle management server 650 can access authentication server 400.

Initially, when a user of IMES receiver 300 uses car sharing services, authentication API 3142 (see Fig. 12 and the like) executed in IMES receiver 300 is invoked.

As authentication API 3142 of IMES receiver 300 receives an IMES-A message from any IMES transmitter 200, it obtains position information, time information, a TOTP, and the like included in the IMES-A message ((1) in Fig. 20). In succession, by transmitting the obtained position information, time information, and TOTP to authentication server 400, authentication API 3142 performs position authentication processing between the authentication API and authentication server 400 ((2) in Fig. 20). When position authentication processing successfully ends, authentication server 400 issues an authentication code to authentication API 3142 ((3) in Fig. 20). Concurrently, authentication server 400 has information corresponding to the issued authentication code stored in authentication code table 424.

IMES receiver 300 transmits an unlocking request to vehicle management server 650 together with the authentication code obtained from authentication server 400 ((4) in Fig. 20). The unlocking request includes identification information indicating a user and information such as an intended duration of use.

Vehicle management server 650 extracts the authentication code included in the information received from IMES receiver 300 and requests authentication server 400 to give information corresponding to the extracted authentication code ((5) in Fig. 20). Authentication server 400 searches for information corresponding to the authentication code received from vehicle management server 650 by referring to authentication code table 424, and gives information (position information, time information, and the like) obtained by that search to vehicle management server 650 ((6) in Fig. 20). Credibility of position authentication per se in addition to the information described above may be given from authentication server 400 to vehicle management server 650.

Vehicle management server 650 determines whether or not the vehicle may be unlocked based on the unlocking request from IMES receiver 300 and position information, time information, and the like obtained from authentication server 400 ((7) in Fig. 20).

When vehicle management server 650 makes determination to permit unlocking of the vehicle, it gives unlocking permission through some kind of communication means to vehicle 660 of interest ((8) in Fig. 20). The user is thus permitted to use vehicle 660.

Vehicle management server 650 may manage permission to use vehicle 660 in addition to unlocking permission. In this case, whether or not a distance between vehicle 660 and IMES receiver 300 is equal to or shorter than a prescribed distance may constantly be monitored.

As set forth above, with position information providing system 1 according to the present embodiment, position information on a position where IMES receiver 300 is present can be provided at necessary timing, and hence application to any services using position information can be made. Since the position information has been authenticated, fraudulent use such as spoofing can be prevented and an application area is wide also from a point of view of service providers.

### (j3: Credit Card Authorization)

Application to credit card authorization will now be described.

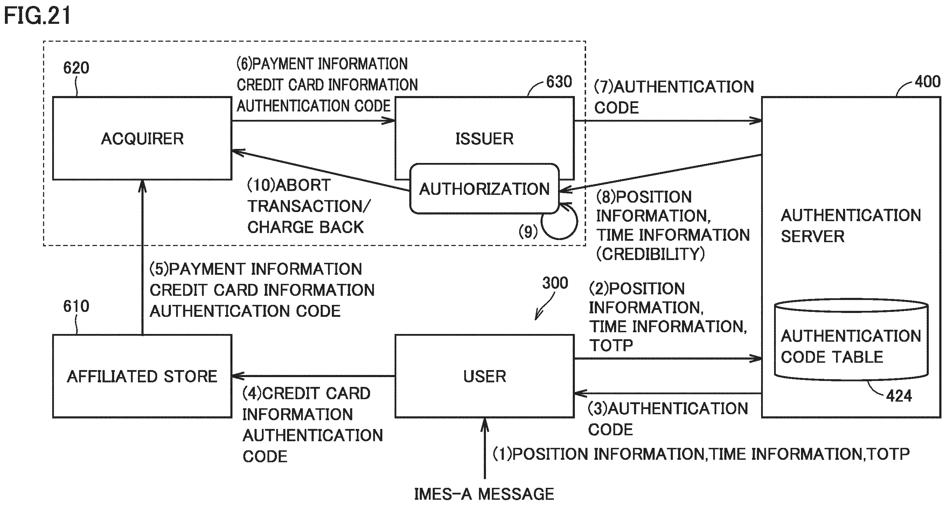

Fig. 21 is a diagram for illustrating an exemplary configuration for implementing credit card authorization by using position information providing system 1 according to the present embodiment. In the configuration shown in Fig. 21, on-line payment using IMES receiver 300 is assumed.

Referring to Fig. 21, an affiliated store 610 to which purchase money is to be paid with a credit card, an acquirer 620 that manages one affiliated store or a plurality of affiliated stores 610, and an acquirer 630 are involved with payment with a credit card. Issuer 630 can access authentication server 400. Acquirer 620 and issuer 630 are credit payment service providers under a specific credit card brand name.

Initially, when a user of IMES receiver 300 makes on-line payment, authentication API 3142 (see Fig. 12 and the like) executed in IMES receiver 300 is invoked.

As API 3142 of IMES receiver 300 receives an IMES-A message from any IMES transmitter 200, it obtains position information, time information, a TOTP, and the like included in the IMES-A message ((1) in Fig. 21). In succession, authentication API 3142 transmits the obtained position information, time information, and TOTP to authentication server 400 to perform position authentication processing between the authentication API and authentication server 400 ((2) in Fig. 21). When position authentication processing successfully ends, authentication server 400 issues an authentication code to authentication API 3142 ((3) in Fig. 21). Concurrently, authentication server 400 has information corresponding to the issued authentication code stored in authentication code table 424.

IMES receiver 300 adds the authentication code obtained from authentication server 400 to credit card information entered by a user and transmits the information to affiliated store 610 (typically, a server of an electronic mall operated by affiliated store 610) ((4) in Fig. 21). The credit card information includes, for example, a credit card number, an expiration date, a security code, a personal message, a password, and the like.

Affiliated store 610 adds payment information including a price of a merchandise or services to be provided to a user to the credit card information and the authentication code received from IMES receiver 300 and then transmits such information to acquirer 620 ((5) in Fig. 21).

Acquirer 620 transfers the information received from affiliated store 610 to issuer 630 and asks issuer 630 whether or not to approve a payment request from affiliated store 610 ((6) in Fig. 21). In other words, acquirer 620 requests issuer 630 to determine whether or not to give authorization.

Issuer 630 extracts the authentication code included in the information received from acquirer 620 and requests authentication server 400 to give information corresponding to the extracted authentication code ((7) in Fig. 21). Authentication server 400 searches for information corresponding to the authentication code received from issuer 630 by referring to authentication code table 424 and gives information (position information, time information, and the like) obtained by that search to issuer 630 ((8) in Fig. 21). Credibility of position authentication per se in addition to the information described above may be given from authentication server 400 to issuer 630.

Issuer 630 authenticates the credit card based on position information, time information, and the like obtained from authentication server 400 in addition to a credit line of the user brought in correspondence with the credit card information from acquirer 620, and determines whether or not to approve the payment request of interest ((9) in Fig. 21). Issuer 630 approves the payment request of interest when authentication successfully ends.

When issuer 630 determines that the credit card was fraudulently used as a result of authentication, it notifies acquirer 620 of abort of transaction or charge back ((10) in Fig. 21).

Since issuer 630 can use reliable position information of a user for authentication in the system shown in Fig. 21, it can sense as fraudulent use, for example, a payment request that indicates a position to which a user is unable to travel from a previous position of use in terms of time.

By thus adopting an authorization scheme shown in Fig. 21, fraudulent use of a credit card can more reliably be detected.

Though authentication server 400 is shown as being present independently of acquirer 620 and issuer 630 in the system shown in Fig. 21 for the sake of convenience of description, the entirety or a part of authentication server 400 may be incorporated in acquirer 620 or issuer 630. As the entirety or a part of authentication server 400 is incorporated in acquirer 620 or issuer 630, position authentication processing can be more simplified and robust.

### <K. Advantages>

In the position information providing system according to the present embodiment, an IMES-A message to which an authentication code (TOTP) corresponding to position information is added is transmitted, and the authentication server authenticates position information presented by the IMES receiver that has received the IMES-A message by using the corresponding authentication code (TOTP). Thus, position information presented by the IMES receiver that has received the message transmitted from the IMES transmitter can be authenticated with the authentication function of the authentication server synchronous in time with the IMES transmitter, so that spoofing (that is, falsification of any of position information, time information, and a user) can be prevented. By adding a function to prevent spoofing, various services using position information can be provided to the user.

The position information providing system according to the present embodiment can achieve strict security. More specifically, a specific code (seed code) for generation of a TOTP by the IMES transmitter can be updated by the authentication server each time, and hence high tampering resistance against possible leakage of the specific code can be achieved. When a specific code (seed code) is stored permanently in the IMES transmitter, high tampering resistance can be achieved by implementation with hardware such as a TPM. Even though a response generation function is known by reverse engineering of the authentication API of the IMES receiver, a TOTP and a challenge are randomly generated and hence a malicious third party is unable to commit a fraud such as spoofing.

In the position information providing system according to the present embodiment, the authentication API may be prepared independently of the OS and the application on the IMES receiver. In this case, one application or a plurality of applications can readily obtain authenticated position information by using the authentication API, so that various services using the position information can be provided without worries.

In the position information providing system according to the present embodiment, an IMES-A message can be transmitted over a signal compatible with a GNSS signal. In this case, for example, by using a general-purpose mobile terminal with a GPS reception function, various services using authenticated position information provided by the position information providing system according to the present embodiment can be received. Therefore, special hardware for using authenticated position information according to the present embodiment is not required and the position information providing system can widely be used with low cost.

In the position information providing system according to the present embodiment, two-stage authentication using a TOTP and a challenge is adopted. Therefore, communication between the IMES receiver and the authentication server does not have to securely be maintained, and a general-purpose communication path can be used. Therefore, various services using authenticated position information according to the present embodiment can widely be used with low cost.

It should be understood that the embodiment disclosed herein is illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1 position information providing system; 2 transmission path; 4 underground mall; 100 management station; 102, 432 GNSS antenna; 103 GNSS signal; 104, 434 clock; 105 source signal; 110 source information generator; 120 source signal modulator; 200 IMES transmitter; 203 message; 210 source signal demodulator; 220 IMES-A generator and transmitter; 222 TOTP generator; 223, 423 TOTP generation function; 224 IMES-A generator; 225, 425, 510, 530, 1057 seed code; 227, 427, 1034, 1054, 2034, 5002, 5202 time information; 270 message format; 271, 272, 273, 274, 275, 276, 277, 278 word; 300 IMES receiver; 302, 402 processor; 304, 404 main memory; 306, 406 output unit; 308, 408 input unit; 310 flash memory; 312, 412 OS; 314 API group; 316 application group; 318 mobile communication module; 320, 430 GNSS module; 322 local communication module; 324, 440 internal bus; 350 file; 352 metadata; 400 authentication server; 410 storage; 414 seed code generation program; 416 authentication program; 418 master table; 420 seed code master table; 422 challenge table; 424 authentication code table; 438 network communication module; 450 authentication engine; 500, 520 IMES-A information; 502 authentication acknowledgment notification; 506 authentication code; 508, 528 IMES-TX information; 522 second-stage authentication request; 538 challenge; 610 affiliated store; 620 acquirer; 630 issuer; 650 vehicle management server; 660 vehicle; 1031, 1051, 2031 timing signal; 1032, 1052, 2032 clock signal; 1033, 1053, 2033, 5001, 5201 position information; 1035, 1055, 2035 leap second information; 1056 device identification information; 3142 authentication API; 2711 preamble region; 2712 message type region; 2713 telemetry region; 2714, 2725, 2735, 2747, 2754, 2764, 2773, 2783 parity bit region; 2721, 2731, 2741, 2751, 2761, 2771, 2781 counter region; 2722, 2762 message page region; 2723, 2744 leap second region; 2724 GPS week region; 2732 TOW region; 2733 LAS region; 2734 time source region; 2742 leap second application week region; 2743 leap second application day region; 2745 transmitter ID; 2746 satellite healthy region; 2752 control region; 2753, 2763, 2772, 2782 TOTP region; 3122 hardware driver; 3143 advance registration information; 3144 communication API; 3162 application; 5204 session ID

## Claims

1. A position information providing system comprising:
at least one message transmitter and an authentication server synchronous in time with each other,
each of the at least one message transmitter comprising
generation means for generating an authentication code depending on time and a specific code uniquely allocated to each message transmitter, and
transmission means for transmitting a message including position information and time information and the generated authentication code,
the authentication server comprising
authentication means for certifying, in response to an authentication request, from a receiver that has received a message from any of the at least one message transmitter, including information in the received message, authenticity of position information included in the authentication request, by determining validity of an authentication code included in the authentication request based on time information included in the authentication request and a specific code uniquely allocated to a message transmitter corresponding to the position information included in the authentication request, and
storage means for storing the position information authenticity of which is certified.

2. The position information providing system according to claim 1, wherein the authentication means comprises
means for generating a challenge and transmitting the challenge to the receiver from which the authentication request is transmitted, in response to determination by the authentication means that the authentication code included in the authentication request is valid, and
means for determining, in response to a second authentication request including a response generated based on the transmitted challenge and information in a message newly received by the receiver which is a destination of the challenge, validity of the response included in the second authentication request.

3. The position information providing system according to claim 2, wherein
the authentication means further comprises means for setting a session for the receiver from which the authentication request is transmitted and transmitting the generated session to the receiver from which the authentication request is transmitted, in response to determination by the authentication means that the authentication code included in the authentication request is valid, and
the second authentication request includes identification information for specifying the set session.

4. The position information providing system according to claim 3, wherein
the authentication means further comprises means for determining whether the session specified in the second authentication request is within a validity period set in advance.

5. The position information providing system according to any one of claims 1 to 4, wherein
the authentication means further comprises means for determining whether a time point of reception of the authentication code is within a validity period set in advance from time indicated in the time information used in generation of the authentication code.

6. The position information providing system according to any one of claims 1 to 5, wherein
the authentication means further comprises means for issuing the authentication code corresponding to the position information authenticity of which is certified, and
the storage means stores the position information the authenticity of which is certified and the issued authentication code in association with each other.

7. The position information providing system according to claim 6, wherein
the storage means provides, in response to a request accompanied by an external authentication code, the position information corresponding to the authentication code included in the request.

8. The position information providing system according to any one of claims 1 to 7, wherein
the authentication server further comprises means for transmitting the specific code to each of the at least one message transmitter.

9. The position information providing system according to any one of claims 1 to 8, wherein
the message transmitter is configured to transmit a message compatible with a wireless signal from a global navigation satellite system.

10. A position information providing method in a position information providing system including at least one message transmitter and an authentication server synchronous in time with each other, the position information providing method comprising:
generating, by each of the at least one message transmitter, an authentication code depending on time and a specific code uniquely allocated to each message transmitter;
transmitting, by each of the at least one message transmitter, a message including position information and time information and the generated authentication code;
certifying, by the authentication server, in response to an authentication request, from a receiver that has received a message from any of the at least one message transmitter, including information in the received message, authenticity of position information included in the authentication request, by determining validity of an authentication code included in the authentication request based on time information included in the authentication request and a specific code uniquely allocated to a message transmitter corresponding to the position information included in the authentication request; and
storing the position information authenticity of which is certified.
